# EUROPEAN PATENT APPLICATION

(11) **EP 4 823 192 A1**
(43) Date of publication of application: **14.10.2026**
(21) Application number: 23960564.5
(22) Date of filing: 07.12.2023
(51) Int. Cl.: H04W 56/00

(54) **COMMUNICATION METHOD, DEVICE, AND STORAGE MEDIUM**

(71) Applicant: Beijing Xiaomi Mobile Software Co., Ltd., Beijing 100085 (CN)
(72) Inventor: LI, Mingju, Beijing 100085 (CN)
(74) Representative: Stöckeler, Ferdinand
(86) International application number: PCT/CN2023/137272
(87) International publication number: WO 2025/118252

(57) **Abstract**

The present disclosure relates to a communication method, a device, and a storage medium. The method comprises: determining that the sum of a first channel state information (CSI) processing unit (CPU) value and a second CPU quantity is greater than a CPU threshold, the first CPU quantity being the CPU capacity to be occupied for updating a first CSI report, and the second CPU quantity being the CPU capacity to be occupied for updating a second CSI report; and not updating a third CSI report, the third CSI report being the CSI report having the lower priority among the first CSI report and the second CSI report. That is, when the CPU capacity is limited, a terminal may not update a CSI report having a low priority, thereby ensuring that a CSI report having a high priority can be promptly updated, and accordingly improving the joint transmission performance of multiple TRPs.

## Description

### FIELD

The present disclosure relates to the field of communication technologies, and in particular, to a communication method, a device and a storage medium.

### BACKGROUND

In Coherent Joint Transmission (CJT) related to multiple Transmission Reception Points (TRPs) in a wireless communication system, in order to ensure that transmissions of the multiple TRPs can arrive at a terminal at the same time or that an arrival time difference is within a Cyclic Prefix (CP) range, i.e., to ensure that the terminal can correctly receive data sent by different TRPs, ideal synchronization among the multiple TRPs and an ideal backhaul link among the multiple TRPs are considered

### SUMMARY

The present disclosure provides a communication method, a device and a storage medium.

According to a first aspect of the present disclosure, a communication method is provided, performed by a terminal, the method includes:
determining that a sum of a first Channel State Information (CSI) Processing Unit (CPU) quantity and a second CPU quantity is greater than a CPU threshold, where the first CPU quantity is a CPU quantity required for updating a first CSI report, and the second CPU quantity is a CPU quantity required for updating a second CSI report, and not updating a third CSI report, where the third CSI report is a CSI report with a lower priority between the first CSI report and the second CSI report.

According to a second aspect of the present disclosure, a communication method is provided, performed by a network device, the method includes:
receiving a fifth CSI report that is updated by a terminal and/or a third CSI report that is not updated by a terminal in a case where the terminal determines that a sum of a first CPU quantity and a second CPU quantity is greater than a CPU threshold, where the first CPU quantity is a CPU quantity required for updating a first CSI report, the second CPU quantity is a CPU quantity required for updating a second CSI report, the fifth CSI report includes a CSI report other than the third CSI report, and the third CSI report is a CSI report with a lower priority between the first CSI report and the second CSI report.

According to a third aspect of the present disclosure, a terminal is provided, including:
a processing module configured to determine that a sum of a first CPU quantity and a second CPU quantity is greater than a CPU threshold, where the first CPU quantity is a CPU quantity required for updating a first CSI report, and the second CPU quantity is a CPU quantity required for updating a second CSI report, and not update a third CSI report, where the third CSI report is a CSI report with a lower priority between the first CSI report and the second CSI report.

According to a fourth aspect of the present disclosure, a network device is provided, including:
a transceiver module configured to receive a fifth CSI report that is updated by a terminal and/or a third CSI report that is not updated by a terminal in a case where the terminal determines that a sum of a first CPU quantity and a second CPU quantity is greater than a CPU threshold, where the first CPU quantity is a CPU quantity required for updating a first CSI report, the second CPU quantity is a CPU quantity required for updating a second CSI report, the fifth CSI report includes a CSI report other than the third CSI report, and the third CSI report is a CSI report with a lower priority between the first CSI report and the second CSI report.

According to a fifth aspect of the present disclosure, a communication device is provided, including:
one or more processors;
where the communication device is configured to perform the communication method according to the first aspect or the second aspect.

According to a sixth aspect of the present disclosure, a communication system is provided, where the communication system may include a terminal and a network device; where the terminal is configured to perform the method according to the first aspect, and the network device is configured to perform the method according to the second aspect.

According to a seventh aspect of the present disclosure, a storage medium is provided, where the storage medium stores instructions that, when executed on a communication device, cause the communication device to perform the method according to the first aspect or the second aspect.

The embodiments of the present disclosure may include the following beneficial effects: determining that a sum of a first CPU quantity and a second CPU quantity is greater than a CPU threshold, where the first CPU quantity is a CPU quantity required for updating a first CSI report, and the second CPU quantity is a CPU quantity required for updating a second CSI report, and not updating a third CSI report, where the third CSI report is a CSI report with a lower priority between the first CSI report and the second CSI report. That is, in a case where CPUs are limited, the terminal may not update the CSI report with a lower priority, so that it can be ensured that the CSI report with a higher priority can be updated in time, thereby improving the joint transmission performance of multiple TRPs.

It should be understood that the above general description and the following detailed description are only exemplary and explanatory, and do not limit the present disclosure.

### BRIEF DESCRIPTION OF THE DRAWINGS

In order to more clearly illustrate the technical solutions in the embodiments of the present disclosure, the following briefly introduces the drawings required for describing the embodiments. The following drawings are only some embodiments of the present disclosure and do not specifically limit the protection scope of the present disclosure.
FIG. 1 is a schematic structural diagram of a communication system according to an embodiment of the present disclosure.
FIG. 2A is an interaction schematic diagram of a communication method according to an embodiment of the present disclosure.
FIG. 2B is an interaction schematic diagram of a communication method according to an embodiment of the present disclosure.
FIG. 2C is an interaction schematic diagram of a communication method according to an embodiment of the present disclosure.
FIG. 3A is a flowchart of a communication method according to an embodiment of the present disclosure.
FIG. 3B is a flowchart of a communication method according to an embodiment of the present disclosure.
FIG. 3C is a flowchart of a communication method according to an embodiment of the present disclosure.
FIG. 3D is a flowchart of a communication method according to an embodiment of the present disclosure.
FIG. 4 is a flowchart of a communication method according to an embodiment of the present disclosure.
FIG. 5 is a flowchart of a communication method according to an embodiment of the present disclosure.
FIG. 6A is a schematic structural diagram of a terminal according to an embodiment of the present disclosure.
FIG. 6B is a schematic structural diagram of a network device according to an embodiment of the present disclosure.
FIG. 7A is a schematic structural diagram of a communication device according to an embodiment of the present disclosure.
FIG. 7B is a schematic structural diagram of a chip according to an embodiment of the present disclosure.

### DETAILED DESCRIPTION

The present disclosure provides a communication method, a device and a storage medium.

In a first aspect, the present disclosure provides a communication method performed by a terminal, the method includes:
determining that a sum of a first CSI CPU quantity and a second CPU quantity is greater than a CPU threshold, where the first CPU quantity is a CPU quantity required for updating a first CSI report, and the second CPU quantity is a CPU quantity required for updating a second CSI report, and not updating a third CSI report, where the third CSI report is a CSI report with a lower priority between the first CSI report and the second CSI report.

In the above embodiment, in a case where CPUs are limited, the terminal may not update the CSI report with a lower priority, so that it can be ensured that the CSI report with a higher priority can be updated in time, thereby improving the joint transmission performance of multiple TRPs.

In combination with some embodiments of the first aspect, in some embodiments, the CPU threshold is determined by:
determining a third CPU quantity required for updating a fourth CSI report, where the fourth CSI report is a CSI report of which an update is started before a designated symbol and is to be ongoing at the designated symbol, and the designated symbol is a symbol from which an updating of the first CSI report and the second CSI report is to be started; and
determining a difference between a designated CPU quantity and the third CPU quantity as the CPU threshold, where the designated CPU quantity is a CPU quantity that the terminal is capable of supporting.

In the above embodiment, when determining the CPU threshold, the CPUs required for the fourth CSI report that is being updated may be reserved, so that it can be ensured that the ongoing updating of the fourth CSI report will not be interrupted, thereby improving system performance.

In combination with some embodiments of the first aspect, in some embodiments, the first CPU quantity is one of:
a quantity of CSI-RS resources included in a CMR;
a difference between a quantity of CSI-RS resources included in a CMR and 1;
1;
a product of a first quantity and a second quantity, where the first quantity is a quantity of TRPs, and the second quantity is determined according to a capability of the terminal; or
a product of a third quantity and a second quantity, where the third quantity is a difference between a quantity of TRPs and 1.

In the above embodiment, the first CPU quantity may be determined in multiple manners, so that the manner of determining the CPU quantity is more flexible.

In combination with some embodiments of the first aspect, in some embodiments, the method further includes:
determining a first priority value of the first CSI report and a second priority value of the second CSI report; and
determining the third CSI report according to the first priority value and the second priority value.

In the above embodiment, the third CSI report may be determined according to the first priority value of the first CSI report and the second priority value of the second CSI report, thereby obtaining the third CSI report with a lower priority.

In combination with some embodiments of the first aspect, in some embodiments, determining the first priority value of the first CSI report and the second priority value of the second CSI report includes:
determining the first priority value according to a first parameter and first information of the first CSI report, where the first information includes at least one of: a reporting manner, an index of a serving cell, a maximum quantity of serving cells, a report configuration identifier, or a maximum CSI report quantity capable of being configured; and
determining the second priority value according to a first parameter and first information of the second CSI report.

In the above embodiment, the priority values may be determined in combination with the first parameter and the first information, so that more accurate priority values can be obtained.

In combination with some embodiments of the first aspect, in some embodiments, the reporting manner includes one of:
an aperiodic CSI report carried in a PUSCH;
a semi-persistent CSI report carried in a PUSCH;
a semi-persistent CSI report carried in a PUCCH; or
a periodic CSI report carried in a PUCCH.

In the above embodiment, the influence of different reporting manners on the priority values may be taken into account, thereby further improving the accuracy of the priority values.

In combination with some embodiments of the first aspect, in some embodiments, the first parameter of the first CSI report includes one of:
a value of the first parameter of the first CSI report is less than or equal to 0;
a value of the first parameter of the first CSI report is greater than or equal to 1; or
a value of the first parameter of the first CSI report is greater than or equal to 0 and less than or equal to 1;
where a value of the first parameter of the second CSI report carrying an L1-RSRP or an L1-SINR is 0, and a value of the first parameter of the second CSI report not carrying an L1-RSRP or an L1-SINR is 1.

In the above embodiment, the value of the first parameter of the first CSI report may include multiple cases, so that the priority of the first CSI report can be flexibly set.

In combination with some embodiments of the first aspect, in some embodiments, the first CSI report includes at least one of:
a time difference between a first arrival time and a second arrival time, where the first arrival time is an arrival time of a first reference signal in a CSI-RS resource, and the second arrival time is an arrival time of a second reference signal in a reference CSI-RS resource;
a frequency offset between the first reference signal and the second reference signal;
a phase offset between the first reference signal and the second reference signal;
a second parameter corresponding to the first reference signal and/or a second parameter corresponding to the second reference signal, where the second parameter includes at least one of: a Doppler shift, a Doppler spread, an average delay, or a delay spread; or
a difference between the second parameter corresponding to the first reference signal and the second parameter corresponding to the second reference signal.

In the above embodiment, the first CSI report may include multiple pieces of information related to the first reference signal and the second reference signal, so that more information of multiple TRPs can be sent, further improving the joint transmission performance of multiple TRPs.

In combination with some embodiments of the first aspect, in some embodiments, the first arrival time is a time when the first reference signal arrives at the terminal, and the second arrival time is a time when the second reference signal arrives at the terminal.

In the above embodiment, the time when the first reference signal arrives at the terminal and the time when the second reference signal arrives at the terminal may be sent, so that the network device can control data transmission of multiple TRPs according to the arrival times at the terminal, thereby improving the joint transmission performance of multiple TRPs.

In combination with some embodiments of the first aspect, in some embodiments, the time difference includes a time interval between a time domain position corresponding to the first reference signal and a time domain position corresponding to the second reference signal; or the time difference does not include a time interval between a time domain position corresponding to the first reference signal and a time domain position corresponding to the second reference signal; where the time domain position includes at least one of: a slot position or a symbol position.

In the above embodiment, the arrival time difference at the terminal may consider the time domain positions or not, so that the manner of determining the time difference is more flexible.

In combination with some embodiments of the first aspect, in some embodiments, the method further includes:
determining the reference CSI-RS resource.

In the above embodiment, the terminal may determine the reference CSI-RS resource, so as to take the reference CSI-RS resource as a reference, and calculate a difference between the reference signal corresponding to each TRP and the reference signal of the reference CSI-RS resource.

In combination with some embodiments of the first aspect, in some embodiments, determining the reference CSI-RS resource includes:
receiving second information sent by a network device, where the second information includes a CMR, and the CMR includes at least one CSI-RS resource; and
determining the reference CSI-RS resource from the at least one CSI-RS resource.

In the above embodiment, the reference CSI-RS resource may be determined according to the second information sent by the network device.

In combination with some embodiments of the first aspect, in some embodiments, determining the reference CSI-RS resource from the at least one CSI-RS resource includes one of:
determining a designated CSI-RS resource among the at least one CSI-RS resource as the reference CSI-RS resource, where the designated CSI-RS resource is a CSI-RS resource indicated by the network device or a first CSI-RS resource among the at least one CSI-RS resource; or
determining a CSI-RS resource that arrives at the terminal first among the at least one CSI-RS resource as the reference CSI-RS resource.

In the above embodiment, the reference CSI-RS resource may be flexibly determined in different manners.

In combination with some embodiments of the first aspect, in some embodiments, the second CSI report includes at least one of:
CRI-RI-PMI-CQI;
CRI-RI-i1;
CRI-RI-i1-CQI;
CRI-RI-CQI;
CRI-RSRP;
CRI-SINR;
SSB-Index-RSRP;
SSB-Index-SINR;
CRI-RI-LI-PMI-CQI;
CRI-RSRP-Index;
SSB-Index-RSRP-Index;
CRI-SINR-Index;
SSB-Index-SINR-Index; or TDCP.

In the above embodiment, the second CSI report may include multiple types, so that a more comprehensive CSI report can be obtained, thereby improving the accuracy of determining the third CSI report.

In a second aspect, the present disclosure provides a communication method, performed by a network device, the method including:
receiving a fifth CSI report that is updated by a terminal and/or a third CSI report that is not updated by a terminal in a case where the terminal determines that a sum of a first CPU quantity and a second CPU quantity is greater than a CPU threshold, where the first CPU quantity is a CPU quantity required for updating a first CSI report, the second CPU quantity is a CPU quantity required for updating a second CSI report, the fifth CSI report includes a CSI report other than the third CSI report, and the third CSI report is a CSI report with a lower priority between the first CSI report and the second CSI report.

In combination with some embodiments of the second aspect, in some embodiments, the CPU threshold is determined by:
determining a third CPU quantity required for updating a fourth CSI report, where the fourth CSI report is a CSI report of which an update is started before a designated symbol and is to be ongoing at the designated symbol, and the designated symbol is a symbol from which an updating of the first CSI report and the second CSI report is to be started; and
determining a difference between a designated CPU quantity and the third CPU quantity as the CPU threshold, where the designated CPU quantity is a CPU quantity that the terminal is capable of supporting.

In combination with some embodiments of the second aspect, in some embodiments, the first CPU quantity is one of:
a quantity of CSI-RS resources included in a CMR;
a difference between a quantity of CSI-RS resources included in a CMR and 1;
1;
a product of a first quantity and a second quantity, where the first quantity is a quantity of TRPs, and the second quantity is determined according to a capability of the terminal; or
a product of a third quantity and a second quantity, where the third quantity is a difference between a quantity of TRPs and 1.

In combination with some embodiments of the second aspect, in some embodiments, the third CSI report is determined according to a first priority value of the first CSI report and a second priority value of the second CSI report, the first priority value is determined according to a first parameter and first information of the first CSI report, the second priority value is determined according to a first parameter and first information of the second CSI report, and the first information includes at least one of: a reporting manner, an index of a serving cell, a maximum quantity of serving cells, a report configuration identifier, or a maximum CSI report quantity capable of being configured.

In combination with some embodiments of the second aspect, in some embodiments, the reporting manner includes one of:
an aperiodic CSI report carried in a PUSCH;
a semi-persistent CSI report carried in a PUSCH;
a semi-persistent CSI report carried in a PUCCH; or
a periodic CSI report carried in a PUCCH.

In combination with some embodiments of the second aspect, in some embodiments, the first parameter of the first CSI report includes one of:
a value of the first parameter of the first CSI report is less than or equal to 0;
a value of the first parameter of the first CSI report is greater than or equal to 1; or
a value of the first parameter of the first CSI report is greater than or equal to 0 and less than or equal to 1;
where a value of the first parameter of the second CSI report carrying an L1-RSRP or an L1-SINR is 0, and a value of the first parameter of the second CSI report not carrying an L1-RSRP or an L1-SINR is 1.

In combination with some embodiments of the second aspect, in some embodiments, the first CSI report includes at least one of:
a time difference between a first arrival time and a second arrival time, where the first arrival time is an arrival time of a first reference signal in a CSI-RS resource, and the second arrival time is an arrival time of a second reference signal in a reference CSI-RS resource;
a frequency offset between the first reference signal and the second reference signal;
a phase offset between the first reference signal and the second reference signal;
a second parameter corresponding to the first reference signal and/or a second parameter corresponding to the second reference signal, where the second parameter includes at least one of: a Doppler shift, a Doppler spread, an average delay, or a delay spread; or
a difference between the second parameter corresponding to the first reference signal and the second parameter corresponding to the second reference signal.

In combination with some embodiments of the second aspect, in some embodiments, the first arrival time is a time when the first reference signal arrives at the terminal, and the second arrival time is a time when the second reference signal arrives at the terminal.

In combination with some embodiments of the second aspect, in some embodiments, the time difference includes a time interval between a time domain position corresponding to the first reference signal and a time domain position corresponding to the second reference signal; or the time difference does not include a time interval between a time domain position corresponding to the first reference signal and a time domain position corresponding to the second reference signal; where the time domain position includes at least one of: a slot position or a symbol position.

In combination with some embodiments of the second aspect, in some embodiments, the method further includes:
sending second information to the terminal, where the second information includes a CMR, and the CMR includes at least one CSI-RS resource, and the second information is used for the terminal to determine the reference CSI-RS resource from the at least one CSI-RS resource.

In combination with some embodiments of the second aspect, in some embodiments, the second CSI report includes at least one of:
CRI-RI-PMI-CQI;
CRI-RI-i1;
CRI-RI-i1-CQI;
CRI-RI-CQI;
CRI-RSRP;
CRI-SINR;
SSB-Index-RSRP;
SSB-Index-SINR;
CRI-RI-LI-PMI-CQI;
CRI-RSRP-Index;
SSB-Index-RSRP-Index;
CRI-SINR-Index;
SSB-Index-SINR-Index; or TDCP.

In a third aspect, the present disclosure provides a communication method, the method including:
a terminal determines that a sum of a first CSI CPU quantity and a second CPU quantity is greater than a CPU threshold, where the first CPU quantity is a CPU quantity required for updating a first CSI report, and the second CPU quantity is a CPU quantity required for updating a second CSI report, and does not update a third CSI report to a network device, where the third CSI report is a CSI report with a lower priority between the first CSI report and the second CSI report.

In a fourth aspect, the present disclosure provides a terminal, which may include at least one of a transceiver module, a processing module, etc.; where the terminal may be configured to perform the first aspect.

In a fifth aspect, the present disclosure provides a network device, which may include at least one of a transceiver module, a processing module, etc.; where the network device may be configured to perform the second aspect.

In a sixth aspect, the present disclosure provides a terminal, which may include: one or more processors; where the terminal may be configured to perform the first aspect.

In a seventh aspect, the present disclosure provides a network device, which may include: one or more processors; where the network device may be configured to perform the second aspect.

In an eighth aspect, the present disclosure provides a communication device, which may include: one or more processors; where the communication device may be configured to perform the first aspect or the second aspect.

In a ninth aspect, the present disclosure provides a communication system, which may include: a terminal and a network device; where the terminal is configured to perform the method according to the first aspect, and the network device is configured to perform the method according to the second aspect.

In a tenth aspect, the present disclosure provides a storage medium, where the storage medium stores instructions that, when executed on a communication device, cause the communication device to perform the method according to the first aspect or the second aspect.

In an eleventh aspect, the present disclosure provides a program product, which, when executed by a communication device, causes the communication device to perform the method according to the first aspect or the second aspect.

In a twelfth aspect, the present disclosure provides a computer program which, when run on a computer, causes the computer to perform the method according to the first aspect or the second aspect.

In a thirteenth aspect, the present disclosure provides a chip or a chip system. The chip or chip system includes a processing circuit configured to perform the method according to the first aspect or the second aspect.

It is to be understood that the above terminal, network device, communication device, communication system, storage medium, program product, computer program, chip or chip system can all be used to perform the methods proposed in the embodiments of the present disclosure. Therefore, the beneficial effects that can be achieved can refer to the beneficial effects in the corresponding methods, which will not be repeated here.

The present disclosure provides a communication method, a device and a storage medium. In some embodiments, terms such as communication method and information processing method may be interchanged; terms such as communication apparatus and information processing apparatus, communication device may be interchanged; terms such as communication system and information processing system may be interchanged.

The embodiments of the present disclosure are not exhaustive, but are only schematic representations of some embodiments, and are not intended to specifically limit the protection scope of the present disclosure. In the absence of contradiction, each step in a certain embodiment can be implemented as an independent embodiment, and the steps can be combined arbitrarily. For example, a solution after removing some steps in a certain embodiment can also be implemented as an independent embodiment, and the order of steps in a certain embodiment can be arbitrarily interchanged. In addition, embodiments in a certain embodiment can be arbitrarily combined. Furthermore, various embodiments can be arbitrarily combined. For example, some or all steps of different embodiments can be arbitrarily combined, and a certain embodiment can be arbitrarily combined with embodiments of other embodiments.

In the various embodiments of the present disclosure, unless otherwise specified and there is a logical conflict, the terms and/or descriptions among the various embodiments are consistent and can be referred to each other, and the technical features in different embodiments can be combined according to their inherent logical relationships to form new embodiments.

The terms used in the embodiments of the present disclosure are only for the purpose of describing specific embodiments, and are not intended to limit the present disclosure.

In the embodiments of the present disclosure, unless otherwise stated, elements expressed in the singular, such as "a", "an", "the", "said", "the aforementioned", "the foregoing", "this", etc., may mean "one and only one" or "one or more", "at least one", etc. For example, in the case where an article such as "a", "an", "the" in English is used in the translation, the noun after the article may be understood as a singular expression or a plural expression.

In some embodiments, "multiple" may mean two or more than two.

In some embodiments, terms such as "at least one of", "one or more", "a plurality of", "multiple" may be interchanged.

In some embodiments, expressions such as "at least one of A, B", "A and/or B", "in one case A, in another case B", "in response to one case A, in response to another case B", etc., may include the following technical solutions depending on the situation: in some embodiments A (A is performed independently of B); in some embodiments B (B is performed independently of A); in some embodiments the execution is selected from A and B (A and B are selectively executed); in some embodiments A and B (both A and B are executed). The same applies when there are more branches such as A, B, C, etc.

In some embodiments, expressions such as "A or B", etc., may include the following technical solutions depending on the situation: in some embodiments A (A is performed independently of B); in some embodiments B (B is performed independently of A); in some embodiments the execution is selected from A and B (A and B are selectively executed). The same applies when there are more branches such as A, B, C, etc.

The prefix words such as "first", "second" in the embodiments of the present disclosure are only used to distinguish different description objects, and do not limit the position, order, priority, quantity or content of the description objects. The description of the description objects refers to the claims or the context description in the embodiments. The use of prefix words should not be regarded as causing additional restrictions. For example, the description object is "field", then the ordinal numbers before "field" in "first field" and "second field" do not limit the position or order between "fields", and "first" and "second" do not limit whether the "fields" they modify are in the same message, nor do they limit the order of the "first field" and the "second field". For another example, the description object is "level", then the ordinal numbers before "level" in "first level" and "second level" do not limit the priority between "levels". For another example, the quantity of description objects is not limited by the ordinal numbers, and may be one or more. Taking "first apparatus" as an example, the quantity of "apparatuses" may be one or more. In addition, the objects modified by different prefix words may be the same or different. For example, the description object is "apparatus", then the "first apparatus" and the "second apparatus" may be the same apparatus or different apparatuses, and their types may be the same or different. For another example, the description object is "information", then the "first information" and the "second information" may be the same information or different information, and their content may be the same or different.

In some embodiments, "including A", "comprising A", "used to indicate A", "carrying A" can be interpreted as directly carrying A, or indirectly indicating A.

In some embodiments, terms such as "in response to...", "in response to determining that...", "in the case where...", "when...", "if...", "if..." may be interchanged.

In some embodiments, terms such as "greater than", "greater than or equal to", "not less than", "more than", "more than or equal to", "not less than", "higher than", "higher than or equal to", "not lower than", "above" may be interchanged, and terms such as "less than", "less than or equal to", "not greater than", "fewer than", "fewer than or equal to", "not more than", "lower than", "lower than or equal to", "not higher than", "below" may be interchanged.

In some embodiments, apparatuses, etc., may be interpreted as physical or virtual, and their names are not limited to those described in the embodiments. Terms such as "apparatus", "equipment", "device", "circuit", "network element", "node", "function", "unit", "section", "system", "network", "chip", "chip system", "entity", "subject" may be interchanged.

In some embodiments, "network" may be interpreted as a device included in the network (e.g., an access network device, a core network device, etc.).

In some embodiments, terms such as "Access Network Device, AN Device", "Radio Access Network Device, RAN Device", "Base Station, BS", "Radio Base Station", "Fixed Station", "Node", "Access Point", "Transmission Point, TP", "Reception Point, RP", "Transmission/Reception Point, TRP", "Panel", "Antenna Panel", "Antenna Array", "Cell", "Macro Cell", "Small Cell", "Femto Cell", "Pico Cell", "Sector", "Cell Group", "Serving Cell", "Carrier", "Component Carrier", "Bandwidth Part, BWP" may be interchanged.

In some embodiments, terms such as "Terminal", "Terminal Device", "User Equipment, UE", "User Terminal", "Mobile Station, MS", "Mobile Terminal, MT", "Subscriber Station", "Mobile Unit", "Subscriber Unit", "Wireless Unit", "Remote Unit", "Mobile Device", "Wireless Device", "Wireless Communication Device", "Remote Device", "Mobile Subscriber Station", "Access Terminal", "Mobile Terminal", "Wireless Terminal", "Remote Terminal", "Handset", "User Agent", "Mobile Client", "Client" may be interchanged.

In some embodiments, an access network device, a core network device, or a network device may be replaced by a terminal. For example, the structures of the various embodiments of the present disclosure may also be applied to communication between multiple terminals (e.g., Device-to-Device, D2D, Vehicle-to-Everything, V2X, etc.) where the communication between an access network device, a core network device, or a network device and a terminal is replaced. In such a case, the terminal may also have all or part of the functions of the access network device. In addition, terms such as "uplink", "downlink" may also be replaced by terms corresponding to communication between terminals (e.g., "side"). For example, an uplink channel, a downlink channel, etc., may be replaced by a sidelink channel or a direct link, and an uplink, a downlink, etc., may be replaced by a sidelink or a direct link.

In some embodiments, a terminal may be replaced by an access network device, a core network device, or a network device. In such a case, the access network device, the core network device, or the network device may also have all or part of the functions of the terminal.

In some embodiments, the acquisition of data, information, etc., may comply with the laws and regulations of the country where it is located.

In some embodiments, data, information, etc., may be acquired after obtaining the user's consent.

In addition, each element, each row, or each column in the tables of the embodiments of the present disclosure may be implemented as an independent embodiment, and any combination of any elements, any rows, or any columns may also be implemented as an independent embodiment.

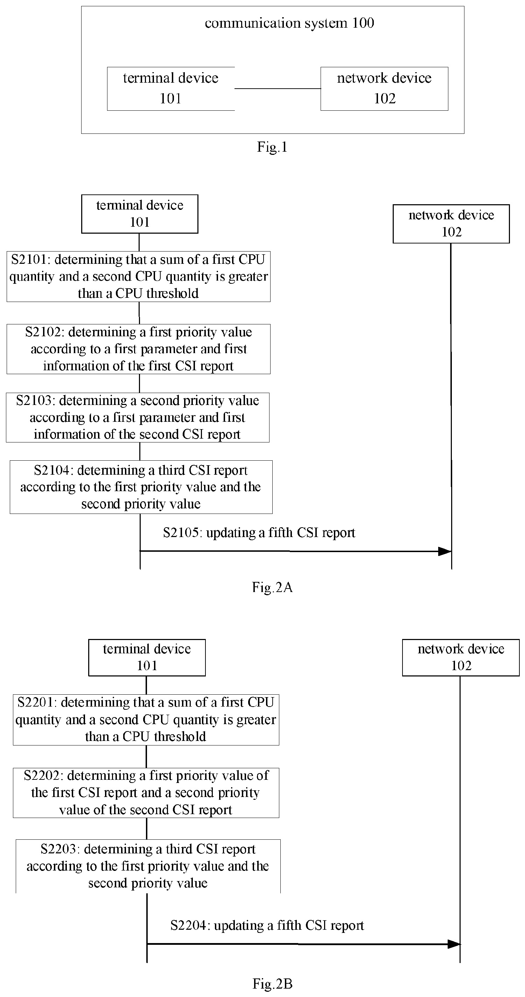

FIG. 1 is a schematic structural diagram of a communication system according to an embodiment of the present disclosure. As shown in FIG. 1, the communication system 100 may include a terminal device 101 and a network device 102.

In some embodiments, the terminal device 101 may include at least one of a mobile phone, a wearable device, an Internet of Things device, a car with communication capabilities, a smart car, a tablet (Pad), a computer with wireless transceiver capabilities, a Virtual Reality (VR) terminal device, an Augmented Reality (AR) terminal device, a wireless terminal device in Industrial Control, a wireless terminal device in Self-Driving, a wireless terminal device in Remote Medical Surgery, a wireless terminal device in Smart Grid, a wireless terminal device in Transportation Safety, a wireless terminal device in Smart City, a wireless terminal device in Smart Home, but is not limited thereto.

In some embodiments, the network device 102 may include at least one of an access network device and a core network device.

In some embodiments, the access network device may be a node or device that connects a terminal device to a wireless network. The access network device may include at least one of an evolved NodeB (eNB) in a 5G communication system, a next generation eNB (ng-eNB), a next generation NodeB (gNB), a Node B (NB), a Home Node B (HNB), a Home evolved NodeB (HeNB), a wireless relay device, a Radio Network Controller (RNC), a Base Station Controller (BSC), a Base Transceiver Station (BTS), a Base Band Unit (BBU), a Mobile Switching Center, a base station in a 6G communication system, an open base station (Open RAN), a cloud base station (Cloud RAN), a base station in other communication systems, an access node in a Wi-Fi system, but is not limited thereto.

In some embodiments, the technical solutions of the present disclosure may be applicable to the Open RAN architecture. In this case, the interfaces between or within the access network devices involved in the embodiments of the present disclosure may become internal interfaces of the Open RAN, and the processes and information interactions between these internal interfaces may be implemented by software or programs.

In some embodiments, the access network device may be composed of a Central Unit (CU) and a Distributed Unit (DU), where the CU may also be referred to as a Control Unit. The CU-DU structure can split the protocol layers of the access network device, placing some protocol layer functions in the CU for centralized control, and distributing the remaining part or all of the protocol layer functions in the DUs, with the CU centrally controlling the DUs, but is not limited thereto.

In some embodiments, the core network device may be one device, or may be multiple devices or a group of devices. The core network may include at least one of an Evolved Packet Core (EPC), a 5G Core Network (5GCN), and a Next Generation Core (NGC).

It is understandable that the communication system described in the embodiments of the present disclosure is for the purpose of illustrating the technical solutions of the embodiments of the present disclosure more clearly, and does not constitute a limitation on the technical solutions proposed in the embodiments of the present disclosure. Those of ordinary skill in the art will know that with the evolution of the system architecture and the emergence of new business scenarios, the technical solutions proposed in the embodiments of the present disclosure are equally applicable to similar technical problems.

The following embodiments of the present disclosure can be applied to the communication system 100 shown in FIG. 1, or a part thereof, but is not limited thereto. The various entities shown in FIG. 1 are examples. The communication system may include all or part of the entities in FIG. 1, and may also include other entities not shown in FIG. 1. The quantity and form of each entity are arbitrary, each entity may be physical or virtual, and the connection relationships between the entities are examples. Entities may be unconnected or connected, and the connection may be in any manner, direct or indirect, wired or wireless.

Various embodiments of the present disclosure can be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 5G New Radio (NR), Future Radio Access (FRA), New-Radio Access Technology (RAT), New Radio (NR), New Radio Access (NX), Future generation radio access (FX), Global System for Mobile communications (GSM (registered trademark)), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), Public Land Mobile Network (PLMN) network, Device-to-Device (D2D) system, Machine to Machine (M2M) system, Internet of Things (IoT) system, Vehicle-to-Everything (V2X), other communication methods, next generation systems extended based on them, etc. In addition, multiple systems may be combined (e.g., LTE or LTE-A and 5G, etc.) for application.

In some embodiments of the present disclosure, if multiple TRPs cannot be ideally synchronized and there is no ideal backhaul link among the multiple TRPs, i.e., the interaction delay between TRPs is large, a CSI report including arrival time differences of the multiple TRPs can be reported to ensure that data sent by the multiple TRPs can arrive at the terminal side at the same time or within the CP range. However, when the terminal device needs to update multiple types of CSI at the same time, each type of CSI occupies a CSI Processing Unit (CPU), and the maximum number of CPUs that the terminal device can support simultaneously is limited. When the CPUs occupied by the multiple types of CSI exceed the maximum number of CPUs supported by the terminal device, it is impossible to update multiple CSI reports at the same time, affecting the joint transmission performance of multiple TRPs. Therefore, how to select which type of CSI report to update becomes an urgent problem to be solved.

FIG. 2A is an interaction schematic diagram of a communication method according to an embodiment of the present disclosure. This method may be performed by the above communication system. As shown in FIG. 2A, the method may include:
Step S2101: a terminal device determining that a sum of a first CPU quantity and a second CPU quantity is greater than a CPU threshold.

In some embodiments, the first CPU quantity is a CPU quantity required for updating a first CSI report.

In some embodiments, the first CSI report may include at least one of:
a time difference between a first arrival time and a second arrival time, where the first arrival time is an arrival time of a first reference signal in a CSI-RS resource, and the second arrival time is an arrival time of a second reference signal in a reference CSI-RS resource;
a frequency offset between the first reference signal and the second reference signal;
a phase offset between the first reference signal and the second reference signal;
a second parameter corresponding to the first reference signal and/or a second parameter corresponding to the second reference signal, where the second parameter includes at least one of: a Doppler shift, a Doppler spread, an average delay, or a delay spread; or
a difference between the second parameter corresponding to the first reference signal and the second parameter corresponding to the second reference signal.

In some embodiments, the CSI-RS resource may be any CSI-RS resource other than the reference CSI-RS resource among multiple CSI-RS resources sent by a network device.

In some embodiments, the terminal device may receive multiple reference signals. For example, the terminal device may receive multiple reference signals sent by a network device. For another example, the terminal device may also receive multiple reference signals sent by other entities.

In some embodiments, the first CSI report may be a CSI report generated by the terminal device after performing channel measurement according to multiple reference signals.

It should be noted that the first CSI report may also include other information specified in the protocol that can reflect the difference of reference signals corresponding to different TRPs.

In some embodiments, the first arrival time may be a time when the first reference signal arrives at the terminal device, and the second arrival time may be a time when the second reference signal arrives at the terminal device.

In some embodiments, when determining the arrival time of a reference signal at the terminal device, the influence of time domain positions corresponding to different reference signals may be considered, or the influence of time domain positions corresponding to the reference signals may not be considered, i.e., only the arrival time difference caused by the different positions or propagation paths of different TRPs is considered.

In some embodiments, the time difference may include a time interval between a time domain position corresponding to the first reference signal and a time domain position corresponding to the second reference signal, where the time domain position includes at least one of: a slot position or a symbol position.

For example, two CSI-RSs, such as CSI-RS#1 and CSI-RS#2, correspond to resources CSI-RS#resource1 and CSI-RS#resource2, respectively. The time domain position of CSI-RS#resource1 is symbol#0 of slot#1, and the time domain position of CSI-RS#resource2 is symbol#0 of slot#2. Assuming the terminal device measures an arrival time of CSI-RS#1 as t1 and an arrival time of CSI-RS#2 as t2. It can be understood that time t1 is a period after symbol#0 of slot#1, and time t2 is a period after symbol#0 of slot#2, so the time difference is t2-t1, and t2-t1 includes not only the time interval between symbol#0 of slot#2 and symbol#0 of slot#1 but also the difference in transmission time of the two reference signals from their respective TRPs to the terminal device.

In another embodiment, the time difference may not include a time interval between a time domain position corresponding to the first reference signal and a time domain position corresponding to the second reference signal.

For example, two CSI-RSs, such as CSI-RS#1 and CSI-RS#2, correspond to resources CSI-RS#resource1 and CSI-RS#resource2, respectively. The time domain position of CSI-RS#resource1 is symbol#0 of slot#1, and the time domain position of CSI-RS#resource2 is symbol#0 of slot#2. Assuming the terminal device measures an arrival time of CSI-RS#1 as t1 and an arrival time of CSI-RS#2 as t2. It can be understood that time t1 is a period after symbol#0 of slot#1, and time t2 is a period after symbol#0 of slot#2. Therefore, t2-t1 includes not only the time interval between symbol#0 of slot#2 and symbol#0 of slot#1 but also the difference in transmission time of the two RSs from their respective TRPs to the terminal device. If the time difference does not include the time interval between the time domain positions corresponding to different CSI-RSs, then the time difference is the value obtained by subtracting the time interval between symbol#0 of slot#2 and symbol#0 of slot#1 from t2-t1.

In some embodiments, the time difference may also be referred to as delay information, i.e., the delay of the first reference signal arriving at the terminal side relative to the second reference signal.

In some embodiments, the difference between the second parameter corresponding to the first reference signal and the second parameter corresponding to the second reference signal may include at least one of: a difference between the Doppler shift corresponding to the first reference signal and the Doppler shift corresponding to the second reference signal, a difference between the Doppler spread corresponding to the first reference signal and the Doppler spread corresponding to the second reference signal, a difference between the average delay corresponding to the first reference signal and the average delay corresponding to the second reference signal, a difference between the delay spread corresponding to the first reference signal and the delay spread corresponding to the second reference signal.

In some embodiments, the terminal device may also determine the reference CSI-RS resource.

For example, the terminal device may determine the reference CSI-RS resource before generating the first CSI report.

In some embodiments, the terminal device may receive second information sent by a network device, where the second information includes a CMR, and the CMR includes at least one CSI-RS resource; and determine the reference CSI-RS resource from the at least one CSI-RS resource.

In some embodiments, the terminal device may receive the second information. For example, the terminal device may receive the second information sent by a network device. For another example, the terminal device may also receive second information sent by other entities.

In some embodiments, the name of the second information is not limited, and may be, for example, "channel measurement resource information", "information indicating channel measurement resources", "measurement indication information", etc.

In some embodiments, the terminal device may determine a designated CSI-RS resource among the at least one CSI-RS resource as the reference CSI-RS resource, where the designated CSI-RS resource is a CSI-RS resource indicated by the network device or a first CSI-RS resource among the at least one CSI-RS resource.

For example, the network device may explicitly indicate the designated CSI-RS resource, and the terminal device may use the designated CSI-RS resource indicated by the network device as the reference CSI-RS resource. The network device may also implicitly indicate the designated CSI-RS resource. "Implicitly indicate" can be interpreted as the network device not indicating the designated CSI-RS resource, and the terminal device may use the first CSI-RS resource among the at least one CSI-RS resource as the reference CSI-RS resource. The first CSI-RS resource may be the CSI-RS resource with the smallest CSI-RS resource ID (identifier).

It should be noted that, when the network device does not indicate the designated CSI-RS resource, any CSI-RS resource among the at least one CSI-RS may also be used as the reference CSI-RS resource, and the any CSI-RS resource may be a CSI-RS resource specified by the protocol.

In another embodiment, the terminal device may determine, among the at least one CSI-RS resource, a CSI-RS resource corresponding to a CSI-RS that arrives at the terminal device first as the reference CSI-RS resource.

For example, the network device may send CSI-RSs on at least one CSI-RS resource to the terminal device, and the terminal device uses the CSI-RS resource corresponding to the first received CSI-RS as the reference CSI-RS resource. In this case, the first channel state information also needs to include an identifier of the reference CSI-RS resource.

In some embodiments, the first CPU quantity is one of:
a quantity of CSI-RS resources included in a CMR;
a difference between a quantity of CSI-RS resources included in a CMR and 1;
1;
a product of a first quantity and a second quantity, where the first quantity is a quantity of TRPs, and the second quantity is determined according to a capability of the terminal; or
a product of a third quantity and a second quantity, where the third quantity is a difference between a quantity of TRPs and 1.

For example, the first CPU quantity can be calculated using any of the following formulas:
${O}_{CPU} = {K}_{S}$ (1)
${O}_{CPU} = {K}_{S} - 1$ (2)
${O}_{CPU} = 1 \left(3\right)$ (3)
${O}_{CPU} = X ∗ {N}_{TRP}$ (4)
${O}_{CPU} = X ∗ \left({N}_{TRP}-1\right)$ (5)
where *O_{CPU}* is the first CPU quantity, *K_{S}* is the quantity of CSI-RS resources included in the CMR, *X* is the second quantity, and *N_{TRP}* is the first quantity.

In some embodiments, the value of X may be greater than 0, for example, the value of X may be 1, 1.5, 2, 2.5, 3, etc.

In some embodiments, if the determined *O_{CPU}* is not an integer, the largest integer less than *O_{CPU}* may be taken as the *O_{CPU}* (i.e., round down). For example, if the calculated *O_{CPU}* is 2.5, the value of *O_{CPU}* may be 2.

It should be noted that the above manners of determining *O_{CPU}* are examples, and *O_{CPU}* may also be determined according to other manners specified in the protocol, which is not limited in the embodiments of the present disclosure.

In some embodiments, the third quantity may be the quantity of TRPs used for CJT transmission minus 1.

It should also be noted that the embodiments of the present disclosure may also determine the final *O_{CPU}* by using the *O_{CPU}* calculated by the multiple formulas above. For example, the average value calculated by the multiple formulas may be taken as *O_{CPU},* the maximum value calculated by the multiple formulas may be taken as *O_{CPU},* or the minimum value calculated by the multiple formulas may be taken as *O_{CPU}.* The specific determination manner is not limited in the embodiments of the present disclosure.

In some embodiments, the second CPU quantity is a CPU quantity required for updating a second CSI report.

In some embodiments, the second CSI report may be a CSI report other than the first CSI report.

In some embodiments, the second CSI report may include at least one of:
CRI-RI-PMI-CQI;
CRI-RI-i1;
CRI-RI-i1-CQI;
CRI-RI-CQI;
CRI-RSRP;
CRI-SINR;
SSB-Index-RSRP;
SSB-Index-SINR;
CRI-RI-LI-PMI-CQI;
CRI-RSRP-Index;
SSB-Index-RSRP-Index;
CRI-SINR-Index;
SSB-Index-SINR-Index; or TDCP.

Here, i1 is spatial basis vector selection indication information, related to the number of CSI-RS ports N1, N2, and O1 and O2. RSRP may be L1-RSRP, and SINR may be L1-SINR. Here, N1 is the number of antenna ports in the first dimension, O1 is the oversampling factor or number of beams in the first dimension, N2 is the number of antenna ports in the second dimension, and O2 is the oversampling factor or number of beams in the second dimension.

It should be noted that if the second CSI report includes L1-RSRP or L1-SINR, it means that the second CSI report carries L1-RSRP or L1-SINR, i.e., the content of the second CSI report is any one of:
CRI-RSRP;
CRI-SINR;
SSB-Index-RSRP;
SSB-Index-SINR;
CRI-RSRP-Index;
SSB-Index-RSRP-Index;
CRI-SINR-Index;
SSB-Index-SINR-Index.

If the second CSI report does not include L1-RSRP or L1-SINR, it means that the second CSI report does not carry L1-RSRP or L1-SINR, i.e., the content of the second CSI report is any one of:
CRI-RI-i1;
CRI-RI-i1-CQI;
CRI-RI-CQI;
CRI-RI-LI-PMI-CQI;
TDCP.

It should be noted that the second CPU quantity may be determined according to the manner specified in the existing protocol, which will not be repeated here.

In some embodiments, the CPU threshold is determined by:
determining a third CPU quantity required for updating a fourth CSI report, where the fourth CSI report is a CSI report of which an update is started before a designated symbol and is to be ongoing at the designated symbol, and the designated symbol is a symbol from which an updating of the first CSI report and the second CSI report is to be started; and
determining a difference between a designated CPU quantity and the third CPU quantity as the CPU threshold, where the designated CPU quantity is a CPU quantity that the terminal device is capable of supporting.

In some embodiments, after generating the first CSI report, the designated symbol at which updating of the first CSI report is to be started next time may be determined, and at the same time, it is determined that the second CSI report and the CPU threshold need to be updated at the designated symbol. If there is a CSI report that has started updating before the designated symbol and still needs to continue updating after the designated symbol (i.e., there is a fourth CSI report at the designated symbol), the third CPU quantity required for updating the fourth CSI report may be determined, and the difference between the designated CPU quantity (i.e., the CPU quantity that the terminal device can support) and the third CPU quantity is calculated, and this difference is used as the CPU threshold. If there is no CSI report that needs to be updated at the designated symbol (i.e., there is no fourth CSI report at the designated symbol), the designated CPU quantity is used as the CPU threshold.

In some embodiments, the CPU threshold may also be a CPU value specified by the protocol. For example, the CPU threshold may be specified according to the CPU quantity that the terminal device can support. This is not limited in the embodiments of the present disclosure.

In some embodiments, after determining the first CPU quantity and the second CPU quantity, if it is determined that the sum of the first CPU quantity and the second CPU quantity is greater than the CPU threshold, then steps S2102 to S2104 may be performed.

Step S2102: the terminal device determining a first priority value according to a first parameter and first information of the first CSI report.

In some embodiments, the first information includes at least one of: a reporting manner, an index of a serving cell, a maximum quantity of serving cells, a report configuration identifier, or a maximum CSI report quantity capable of being configured; and determines the second priority value according to a first parameter and first information of the second CSI report.

Here, the index of the serving cell in the first information of the first CSI report may be the index of the serving cell corresponding to the first CSI report.

In some embodiments, the first priority value can be calculated using formula (1):
${Pri}_{iCSI} \left(y, k, c, s\right) = 2 ∗ {N}_{cells} ∗ {M}_{s} ∗ y + {N}_{cells} ∗ {M}_{s} ∗ k + {M}_{s} ∗ c ∗ s$ (6)
where *y* is the reporting manner of the first CSI report, *k* is the first parameter of the first CSI report, *c* is the index of the serving cell corresponding to the first CSI report, *N_{cells}* is the maximum quantity of serving cells corresponding to the first CSI report, s is the report configuration identifier of the first CSI report, and *Mₛ* is the maximum quantity of CSI report configurations, where "maximum quantity of CSI report configurations" can be interpreted as the maximum number of CSI reports that the terminal device can configure.

In some embodiments, the reporting manner may include one of:
an aperiodic CSI report carried in a PUSCH;
a semi-persistent CSI report carried in a PUSCH;
a semi-persistent CSI report carried in a PUCCH; or
a periodic CSI report carried in a PUCCH.

For example, *y*=0 indicates an aperiodic CSI report carried in a PUSCH, *y*=1 indicates a semi-persistent CSI report carried in a PUSCH, *y=*2 indicates a semi-persistent CSI report carried in a PUCCH, and *y*=3 indicates a periodic CSI report carried in a PUCCH.

In some embodiments, the second CSI report carries an L1-RSRP or an L1-SINR; or the second CSI report does not carry an L1-RSRP or an L1-SINR.

For example, when the second CSI report carries an L1-RSRP or an L1-SINR, *k*=0, and when the second CSI report does not carry an L1-RSRP or an L1-SINR, *k*=1.

In some embodiments, *N_{cells}* may be the value of the higher layer parameter maxNrofServingCells, s may be reportConfigID, and *Mₛ* may be the value of the higher layer parameter maxNrofCSI-ReportConfigurations.

It should be noted that only the first parameter (k) in the above first information is related to the content of the CSI report.

In some embodiments, the first parameter of the first CSI report includes one of:
a value of the first parameter of the first CSI report is less than or equal to 0;
a value of the first parameter of the first CSI report is greater than or equal to 1; or
a value of the first parameter of the first CSI report is greater than or equal to 0 and less than or equal to 1;
where a value of the first parameter of the second CSI report carrying an L1-RSRP or an L1-SINR is 0, and a value of the first parameter of the second CSI report not carrying an L1-RSRP or an L1-SINR is 1.

For example, when the first information of the first CSI report is the same as the first information of the second CSI report, if the first parameter of the second CSI report indicates that it does not carry an L1-RSRP or an L1-SINR, i.e., the value of the first parameter of the second CSI report is 1, and the value of the first parameter of the first CSI report is less than or equal to 0, then the priority value of the first CSI report is less than the priority value of the second CSI report. If the first parameter of the second CSI report indicates that it carries an L1-RSRP or an L1-SINR, i.e., the value of the first parameter of the second CSI report is 0, and the value of the first parameter of the first CSI report is greater than or equal to 1, then the priority value of the first CSI report is greater than the priority value of the second CSI report.

Step S2103: the terminal device determining a second priority value according to a first parameter and first information of the second CSI report.

It should be noted that the definition of the first information of the second CSI report may refer to the definition of the first information of the first CSI report, and the index of the serving cell in the first information of the second CSI report may be the index of the serving cell corresponding to the second CSI report.

In some embodiments, the second priority value can be calculated using formula (1), where *y* is the reporting manner of the second CSI report, *k* is the first parameter of the second CSI report, *c* is the index of the serving cell corresponding to the second CSI report, *N_{cells}* is the maximum quantity of serving cells corresponding to the second CSI report, s is the report configuration identifier of the second CSI report, and *Mₛ* is the maximum quantity of CSI report configurations.

Step S2104: the terminal device determining a third CSI report according to the first priority value and the second priority value.

In some embodiments, the third CSI report may be the CSI report with a lower priority between the first CSI report and the second CSI report.

In some embodiments, the higher the priority value, the lower the priority. The third CSI report may be the CSI report with a lower priority between the first CSI report and the second CSI report.

In some embodiments, if the first priority value is greater than the second priority value, the first CSI report may be taken as the third CSI report; if the first priority value is less than the second priority value, the second CSI report may be taken as the third CSI report.

Step S2105: the terminal device updating a fifth CSI report.

In some embodiments, the network device may receive the updated fifth CSI report and/or the un-updated third CSI report. For example, the network device may receive the updated fifth CSI report and/or the un-updated third CSI report from the terminal device. For another example, the network device may also receive the updated fifth CSI report and/or the un-updated third CSI report from other entities.

In some embodiments, the fifth CSI report may include a CSI report other than the third CSI report.

For example, if the CSI report with a lower priority between the first CSI report and the second CSI report is the first CSI report, then the third CSI report is the first CSI report, and the fifth CSI report is the second CSI report.

In some embodiments, the terminal device updating the fifth CSI report may be understood as the terminal device not updating the third CSI report. When the terminal device sends CSI reports, it may send at least one of the updated fifth CSI report and the un-updated third CSI report. If there is no conflict in the sending time of the updated fifth CSI report and the un-updated third CSI report, both may be sent, i.e., respectively sent at their respective sending times. If there is a conflict, the un-updated third CSI report is not sent, or the updated fifth CSI report and the un-updated third CSI report are sent in a multiplexed manner at overlapping times.

Using the above method, when CPUs are limited, the terminal device may not update the CSI report with a lower priority, so that it can be ensured that the CSI report with a higher priority can be updated in time, thereby improving the joint transmission performance of multiple TRPs.

It should be noted that the embodiments of the present disclosure do not limit the execution order of determining the first priority value in step S2102 and determining the second priority value in step S2103. The step of determining the first priority value in step S2102 may be performed first, or the step of determining the second priority value in step S2103 may be performed first.

The method involved in the embodiments of the present disclosure may include at least one of the above steps S2101 to S2105. For example, step S2101 may be implemented as an independent embodiment, step S2105 may be implemented as an independent embodiment, steps S2102+S2103 may be implemented as an independent embodiment, and steps S2104+S2105 may be implemented as an independent embodiment, but is not limited thereto.

In some embodiments, the above steps S2101 to S2105 are all optional steps. For example, step S2101 is optional, and one or more of these steps may be omitted or replaced in different embodiments. For another example, step S2105 is optional, and one or more of these steps may be omitted or replaced in different embodiments.

In some embodiments, reference may be made to other embodiments described before or after the specification corresponding to FIG. 2A.

In some embodiments, terms such as "information", "message", "signal", "signaling", "report", "configuration", "indication", "instruction", "command", "channel", "parameter", "domain", "field", "symbol", "codeword", "codebook", "codepoint", "bit", "data", "program", "chip" may be interchanged.

In some embodiments, terms such as "obtain", "acquire", "get", "receive", "transmit", "bidirectional transmission", "send and/or receive" may be interchanged, and can be interpreted as receiving from other entities, obtaining from a protocol, obtaining from a higher layer, processing by itself, autonomously implementing, etc.

In some embodiments, terms such as "send", "transmit", "report", "deliver", "transmission", "bidirectional transmission", "send and/or receive" may be interchanged.

In some embodiments, terms such as "certain", "predetermined", "preset", "set", "indicated", "some", "any", "first" may be interchanged. "Certain A", "predetermined A", "preset A", "set A", "indicated A", "some A", "any A", "first A" can be interpreted as A pre-specified in the protocol, etc., or as A obtained through setting, configuration, indication, etc., or as certain A, some A, any A, first A, etc., but is not limited thereto.

FIG. 2B is an interaction schematic diagram of a communication method according to an embodiment of the present disclosure. This method may be performed by the above communication system. As shown in FIG. 2B, the method may include:
Step S2201: a terminal device determining that a sum of a first CPU quantity and a second CPU quantity is greater than a CPU threshold.

Embodiments of step S2201 may refer to the embodiments of step S2101 in FIG. 2A and other related parts in the embodiments related to FIG. 2A, which will not be repeated here.

Step S2202: the terminal device determining a first priority value of the first CSI report and a second priority value of the second CSI report.

Embodiments of step S2202 may refer to the embodiments of steps S2102 and S2103 in FIG. 2A and other related parts in the embodiments related to FIG. 2A, which will not be repeated here.

Step S2203: the terminal device determining a third CSI report according to the first priority value and the second priority value.

Embodiments of step S2203 may refer to the embodiments of step S2104 in FIG. 2A and other related parts in the embodiments related to FIG. 2A, which will not be repeated here.

Step S2204: the terminal device updating a fifth CSI report.

Embodiments of step S2204 may refer to the embodiments of step S2105 in FIG. 2A and other related parts in the embodiments related to FIG. 2A, which will not be repeated here.

The method involved in the embodiments of the present disclosure may include at least one of the above steps S2201 to S2204. For example, step S2201 may be implemented as an independent embodiment, step S2204 may be implemented as an independent embodiment, steps S2202+S2203 may be implemented as an independent embodiment, but is not limited thereto.

In some embodiments, the above steps S2201 to S2204 are all optional steps. For example, step S2203 is optional, and one or more of these steps may be omitted or replaced in different embodiments. For another example, step S2204 is optional, and one or more of these steps may be omitted or replaced in different embodiments.

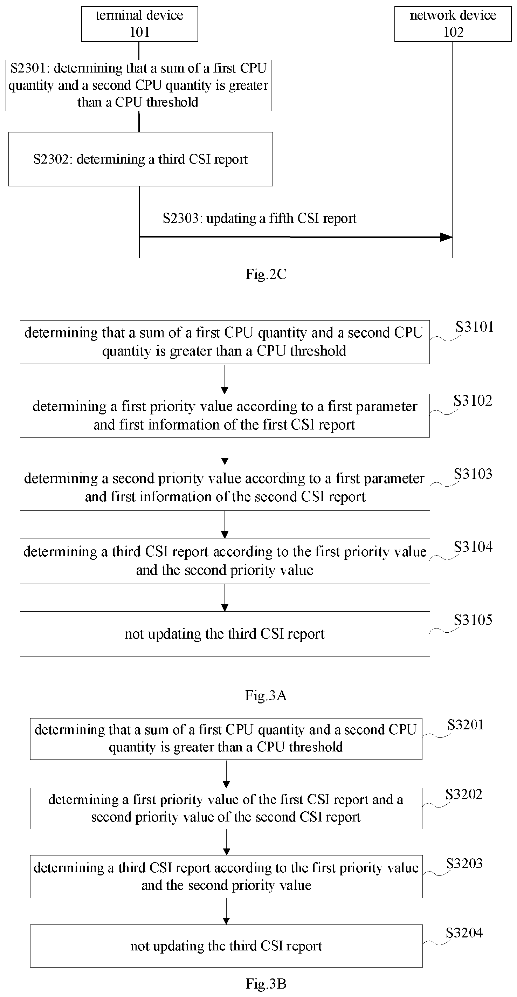

FIG. 2C is an interaction schematic diagram of a communication method according to an embodiment of the present disclosure. This method may be performed by the above communication system. As shown in FIG. 2C, the method may include:
Step S2301: a terminal device determining that a sum of a first CPU quantity and a second CPU quantity is greater than a CPU threshold.

Embodiments of step S2301 may refer to the embodiments of step S2101 in FIG. 2A and other related parts in the embodiments related to FIG. 2A, which will not be repeated here.

Step S2302: the terminal device determining a third CSI report.

Embodiments of step S2302 may refer to the embodiments of step S2104 in FIG. 2A and other related parts in the embodiments related to FIG. 2A, which will not be repeated here.

Step S2303: the terminal device updating a fifth CSI report.

Embodiments of step S2303 may refer to the embodiments of step S2105 in FIG. 2A and other related parts in the embodiments related to FIG. 2A, which will not be repeated here.

The method involved in the embodiments of the present disclosure may include at least one of the above steps S2301 to S2303. For example, step S2301 may be implemented as an independent embodiment, step S2303 may be implemented as an independent embodiment, steps S2302+S2303 may be implemented as an independent embodiment, but is not limited thereto.

In some embodiments, the above steps S2301 to S2303 are all optional steps. For example, step S2301 is optional, and one or more of these steps may be omitted or replaced in different embodiments. For another example, step S2303 is optional, and one or more of these steps may be omitted or replaced in different embodiments.

FIG. 3A is a flowchart of a communication method according to an embodiment of the present disclosure. As shown in FIG. 3A, the present disclosure relates to a communication method, which may be performed by a terminal device. The method may include:
Step S3101: determining that a sum of a first CPU quantity and a second CPU quantity is greater than a CPU threshold.

Embodiments of step S3101 may refer to the embodiments of step S2101 in FIG. 2A and other related parts in the embodiments related to FIG. 2A, which will not be repeated here.

Step S3102: determining a first priority value according to a first parameter and first information of the first CSI report.

Embodiments of step S3102 may refer to the embodiments of step S2102 in FIG. 2A and other related parts in the embodiments related to FIG. 2A, which will not be repeated here.

Step S3103: determining a second priority value according to a first parameter and first information of the second CSI report.

Embodiments of step S3103 may refer to the embodiments of step S2103 in FIG. 2A and other related parts in the embodiments related to FIG. 2A, which will not be repeated here.

Step S3104: determining a third CSI report according to the first priority value and the second priority value.

Embodiments of step S3104 may refer to the embodiments of step S2104 in FIG. 2A and other related parts in the embodiments related to FIG. 2A, which will not be repeated here.

Step S3105: not updating the third CSI report.

Embodiments of step S3105 may refer to the embodiments of step S2105 in FIG. 2A and other related parts in the embodiments related to FIG. 2A, which will not be repeated here.

In some embodiments, "not update the third CSI report" may be understood as "send at least one of the updated fifth CSI report and the un-updated third CSI report to the network device".

In some embodiments, the terminal device may send at least one of the updated fifth CSI report and the un-updated third CSI report to the network device, but is not limited thereto, and the terminal device may also send at least one of the updated fifth CSI report and the un-updated third CSI report to other entities.

The method involved in the embodiments of the present disclosure may include at least one of the above steps S3101 to S3105. For example, step S3101 may be implemented as an independent embodiment, step S3105 may be implemented as an independent embodiment, steps S3104+S3105 may be implemented as an independent embodiment, but is not limited thereto.

In some embodiments, the above steps S3101 to S3105 are all optional steps. For example, steps S3101 and S3105 are optional, and one or more of these steps may be omitted or replaced in different embodiments.

In some embodiments, reference may be made to other embodiments described before or after the specification corresponding to FIG. 3A.

FIG. 3B is a flowchart of a communication method according to an embodiment of the present disclosure. As shown in FIG. 3B, the present disclosure relates to a communication method, which may be performed by a terminal device. The method may include:
Step S3201: determining that a sum of a first CPU quantity and a second CPU quantity is greater than a CPU threshold.

Embodiments of step S3201 may refer to the embodiments of step S2101 in FIG. 2A and step S3101 in FIG. 3A, and other related parts in the embodiments related to FIG. 2A and FIG. 3A, which will not be repeated here.

Step S3202: determining a first priority value of the first CSI report and a second priority value of the second CSI report.

Embodiments of step S3202 may refer to the embodiments of steps S2102 and S2103 in FIG. 2A and steps S3102 and S3103 in FIG. 3A, and other related parts in the embodiments related to FIG. 2A and FIG. 3A, which will not be repeated here.

Step S3203: determining a third CSI report according to the first priority value and the second priority value.

Embodiments of step S3203 may refer to the embodiments of step S2104 in FIG. 2A and step S3104 in FIG. 3A, and other related parts in the embodiments related to FIG. 2A and FIG. 3A, which will not be repeated here.

Step S3204: not updating the third CSI report.

Embodiments of step S3204 may refer to the embodiments of step S2105 in FIG. 2A and step S3105 in FIG. 3A, and other related parts in the embodiments related to FIG. 2A and FIG. 3A, which will not be repeated here.

The method involved in the embodiments of the present disclosure may include at least one of the above steps S3201 to S3204. For example, step S3201 may be implemented as an independent embodiment, step S3204 may be implemented as an independent embodiment, steps S3203+S3204 may be implemented as an independent embodiment, but is not limited thereto.

In some embodiments, the above steps S3201 to S3204 are all optional steps. For example, step S3201 is optional, and one or more of these steps may be omitted or replaced in different embodiments. For another example, step S3204 is optional, and one or more of these steps may be omitted or replaced in different embodiments.

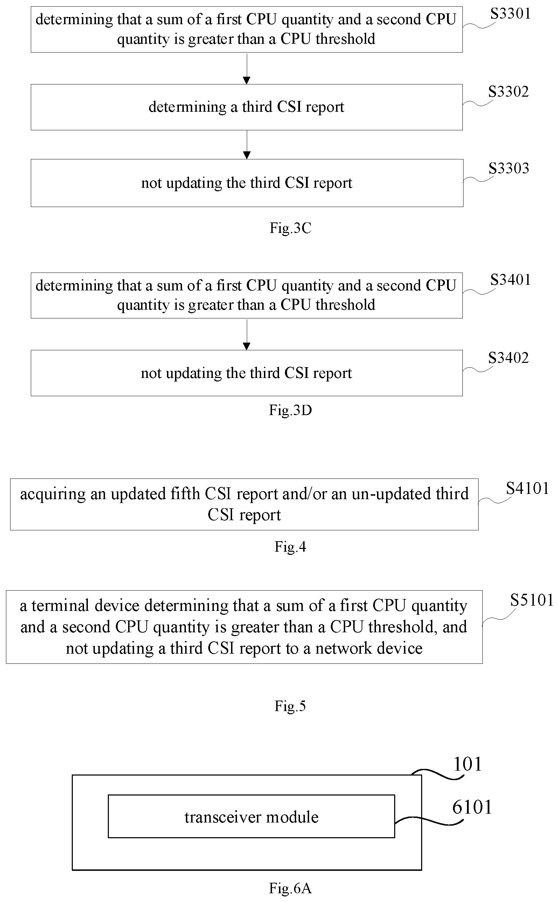

FIG. 3C is a flowchart of a communication method according to an embodiment of the present disclosure. As shown in FIG. 3C, the present disclosure relates to a communication method, which may be performed by a terminal device. The method may include:

Step S3301: determining that a sum of a first CPU quantity and a second CPU quantity is greater than a CPU threshold.

Embodiments of step S3301 may refer to the embodiments of step S2101 in FIG. 2A and step S3101 in FIG. 3A, and other related parts in the embodiments related to FIG. 2A and FIG. 3A, which will not be repeated here.

Step S3302: determining a third CSI report.

Embodiments of step S3302 may refer to the embodiments of step S2104 in FIG. 2A and step S3104 in FIG. 3A, and other related parts in the embodiments related to FIG. 2A and FIG. 3A, which will not be repeated here.

Step S3303: not updating the third CSI report.

Embodiments of step S3303 may refer to the embodiments of step S2105 in FIG. 2A and step S3105 in FIG. 3A, and other related parts in the embodiments related to FIG. 2A and FIG. 3A, which will not be repeated here.

The method involved in the embodiments of the present disclosure may include at least one of the above steps S3301 to S3303. For example, step S3301 may be implemented as an independent embodiment, step S3303 may be implemented as an independent embodiment, steps S3302+S3303 may be implemented as an independent embodiment, but is not limited thereto.

In some embodiments, the above steps S3301 to S3303 are all optional steps. For example, step S3301 is optional, and one or more of these steps may be omitted or replaced in different embodiments. For another example, step S3303 is optional, and one or more of these steps may be omitted or replaced in different embodiments.

FIG. 3D is a flowchart of a communication method according to an embodiment of the present disclosure. As shown in FIG. 3D, the present disclosure relates to a communication method, which may be performed by a terminal device. The method may include:

Step S3401: determining that a sum of a first CPU quantity and a second CPU quantity is greater than a CPU threshold.

Embodiments of step S3401 may refer to the embodiments of step S2101 in FIG. 2A and step S3101 in FIG. 3A, and other related parts in the embodiments related to FIG. 2A and FIG. 3A, which will not be repeated here.

Step S3402: not updating the third CSI report.

Embodiments of step S3402 may refer to the embodiments of step S2105 in FIG. 2A and step S3105 in FIG. 3A, and other related parts in the embodiments related to FIG. 2A and FIG. 3A, which will not be repeated here.

In some embodiments, the CPU threshold is determined by:
determining a third CPU quantity required for updating a fourth CSI report, where the fourth CSI report is a CSI report of which an update is started before a designated symbol and is to be ongoing at the designated symbol, and the designated symbol is a symbol from which an updating of the first CSI report and the second CSI report is to be started; and
determining a difference between a designated CPU quantity and the third CPU quantity as the CPU threshold, where the designated CPU quantity is a CPU quantity that the terminal device is capable of supporting.

In some embodiments, the first CPU quantity is one of:
a quantity of CSI-RS resources included in a CMR;
a difference between a quantity of CSI-RS resources included in a CMR and 1;
1;
a product of a first quantity and a second quantity, where the first quantity is a quantity of TRPs, and the second quantity is determined according to a capability of the terminal device; or
a product of a third quantity and a second quantity, where the third quantity is a difference between a quantity of TRPs and 1.

In some embodiments, the method further includes:
determining a first priority value of the first CSI report and a second priority value of the second CSI report; and
determining the third CSI report according to the first priority value and the second priority value.

In some embodiments, determining the first priority value of the first CSI report and the second priority value of the second CSI report includes:
determining the first priority value according to a first parameter and first information of the first CSI report, where the first information includes at least one of: a reporting manner, an index of a serving cell, a maximum quantity of serving cells, a report configuration identifier, or a maximum CSI report quantity capable of being configured; and
determining the second priority value according to a first parameter and first information of the second CSI report.

In some embodiments, the reporting manner includes one of:
an aperiodic CSI report carried in a PUSCH;
a semi-persistent CSI report carried in a PUSCH;
a semi-persistent CSI report carried in a PUCCH; or
a periodic CSI report carried in a PUCCH.

In some embodiments, the first parameter of the first CSI report includes one of:
a value of the first parameter of the first CSI report is less than or equal to 0;
a value of the first parameter of the first CSI report is greater than or equal to 1; or
a value of the first parameter of the first CSI report is greater than or equal to 0 and less than or equal to 1;
where a value of the first parameter of the second CSI report carrying an L1-RSRP or an L1-SINR is 0, and a value of the first parameter of the second CSI report not carrying an L1-RSRP or an L1-SINR is 1.

In some embodiments, the first CSI report includes at least one of:
a time difference between a first arrival time and a second arrival time, where the first arrival time is an arrival time of a first reference signal in a CSI-RS resource, and the second arrival time is an arrival time of a second reference signal in a reference CSI-RS resource;
a frequency offset between the first reference signal and the second reference signal;
a phase offset between the first reference signal and the second reference signal;
a second parameter corresponding to the first reference signal and/or a second parameter corresponding to the second reference signal, where the second parameter includes at least one of: a Doppler shift, a Doppler spread, an average delay, or a delay spread; or
a difference between the second parameter corresponding to the first reference signal and the second parameter corresponding to the second reference signal.

In some embodiments, the first arrival time is a time when the first reference signal arrives at the terminal device, and the second arrival time is a time when the second reference signal arrives at the terminal device.

In some embodiments, the time difference includes a time interval between a time domain position corresponding to the first reference signal and a time domain position corresponding to the second reference signal; or the time difference does not include a time interval between a time domain position corresponding to the first reference signal and a time domain position corresponding to the second reference signal; where the time domain position includes at least one of: a slot position or a symbol position.

In some embodiments, the method further includes:
determining the reference CSI-RS resource.

In some embodiments, determining the reference CSI-RS resource includes:
receiving second information sent by a network device, where the second information includes a CMR, and the CMR includes at least one CSI-RS resource; and
determining the reference CSI-RS resource from the at least one CSI-RS resource.

In some embodiments, determining the reference CSI-RS resource from the at least one CSI-RS resource includes one of:
determining a designated CSI-RS resource among the at least one CSI-RS resource as the reference CSI-RS resource, where the designated CSI-RS resource is a CSI-RS resource indicated by the network device or a first CSI-RS resource among the at least one CSI-RS resource; or
determining a CSI-RS resource that arrives at the terminal device first among the at least one CSI-RS resource as the reference CSI-RS resource.

In some embodiments, the second CSI report includes at least one of:
CRI-RI-PMI-CQI;
CRI-RI-i1;
CRI-RI-i1-CQI;
CRI-RI-CQI;
CRI-RSRP;
CRI-SINR;
SSB-Index-RSRP;
SSB-Index-SINR;
CRI-RI-LI-PMI-CQI;
CRI-RSRP-Index;
SSB-Index-RSRP-Index;
CRI-SINR-Index;
SSB-Index-SINR-Index; or TDCP.

FIG. 4 is a flowchart of a communication method according to an embodiment of the present disclosure. As shown in FIG. 4, the present disclosure relates to a communication method, which may be performed by a network device. The method may include:
Step S4101: acquiring an updated fifth CSI report and/or an un-updated third CSI report.

Embodiments of step S4101 may refer to the embodiments of step S2105 in FIG. 2A and other related parts in the embodiments related to FIG. 2A, which will not be repeated here.

In some embodiments, the network device may receive the updated fifth CSI report and/or the un-updated third CSI report sent by the terminal device, but is not limited thereto, and the network device may also receive the updated fifth CSI report and/or the un-updated third CSI report sent by other entities.

In some embodiments, the CPU threshold is determined by:
determining a third CPU quantity required for updating a fourth CSI report, where the fourth CSI report is a CSI report of which an update is started before a designated symbol and is to be ongoing at the designated symbol, and the designated symbol is a symbol from which an updating of the first CSI report and the second CSI report is to be started; and
determining a difference between a designated CPU quantity and the third CPU quantity as the CPU threshold, where the designated CPU quantity is a CPU quantity that the terminal device is capable of supporting.

In some embodiments, the first CPU quantity is one of:
a quantity of CSI-RS resources included in a CMR;
a difference between a quantity of CSI-RS resources included in a CMR and 1;
1;
a product of a first quantity and a second quantity, where the first quantity is a quantity of TRPs, and the second quantity is determined according to a capability of the terminal device; or
a product of a third quantity and a second quantity, where the third quantity is a difference between a quantity of TRPs and 1.

In some embodiments, the third CSI report is determined according to a first priority value of the first CSI report and a second priority value of the second CSI report, the first priority value is determined according to a first parameter and first information of the first CSI report, the second priority value is determined according to a first parameter and first information of the second CSI report, and the first information includes at least one of: a reporting manner, an index of a serving cell, a maximum quantity of serving cells, a report configuration identifier, or a maximum CSI report quantity capable of being configured.

In some embodiments, the reporting manner includes one of:
an aperiodic CSI report carried in a PUSCH;
a semi-persistent CSI report carried in a PUSCH;
a semi-persistent CSI report carried in a PUCCH; or
a periodic CSI report carried in a PUCCH.

In some embodiments, the first parameter of the first CSI report includes one of:
a value of the first parameter of the first CSI report is less than or equal to 0;
a value of the first parameter of the first CSI report is greater than or equal to 1; or
a value of the first parameter of the first CSI report is greater than or equal to 0 and less than or equal to 1;
where a value of the first parameter of the second CSI report carrying an L1-RSRP or an L1-SINR is 0, and a value of the first parameter of the second CSI report not carrying an L1-RSRP or an L1-SINR is 1.

In some embodiments, the first CSI report includes at least one of:
a time difference between a first arrival time and a second arrival time, where the first arrival time is an arrival time of a first reference signal in a CSI-RS resource, and the second arrival time is an arrival time of a second reference signal in a reference CSI-RS resource;
a frequency offset between the first reference signal and the second reference signal;
a phase offset between the first reference signal and the second reference signal;
a second parameter corresponding to the first reference signal and/or a second parameter corresponding to the second reference signal, where the second parameter includes at least one of: a Doppler shift, a Doppler spread, an average delay, or a delay spread; or
a difference between the second parameter corresponding to the first reference signal and the second parameter corresponding to the second reference signal.

In some embodiments, the first arrival time is a time when the first reference signal arrives at the terminal device, and the second arrival time is a time when the second reference signal arrives at the terminal device.

In some embodiments, the time difference includes a time interval between a time domain position corresponding to the first reference signal and a time domain position corresponding to the second reference signal; or the time difference does not include a time interval between a time domain position corresponding to the first reference signal and a time domain position corresponding to the second reference signal; where the time domain position includes at least one of: a slot position or a symbol position.

In some embodiments, the method further includes:
sending second information to the terminal device, where the second information includes a CMR, and the CMR includes at least one CSI-RS resource, and the second information is used for the terminal device to determine the reference CSI-RS resource from the at least one CSI-RS resource.

In some embodiments, the second CSI report includes at least one of:
CRI-RI-PMI-CQI;
CRI-RI-i1;
CRI-RI-i1-CQI;
CRI-RI-CQI;
CRI-RSRP;
CRI-SINR;
SSB-Index-RSRP;
SSB-Index-SINR;
CRI-RI-LI-PMI-CQI;
CRI-RSRP-Index;
SSB-Index-RSRP-Index;
CRI-SINR-Index;
SSB-Index-SINR-Index; or TDCP.

FIG. 5 is a flowchart of a communication method according to an embodiment of the present disclosure. As shown in FIG. 5, the present disclosure relates to a communication method, which may be performed by a communication system. The method may include:
Step S5101: a terminal device determining that a sum of a first CPU quantity and a second CPU quantity is greater than a CPU threshold, and not updating a third CSI report to a network device.

Embodiments of step S5101 may refer to the embodiments of step S2105 in FIG. 2A, step S3105 in FIG. 3A, step S4101 in FIG. 4, and other related parts in the embodiments related to FIG. 2A, FIG. 3A, and FIG. 4, which will not be repeated here.

In some embodiments, the above method may include the methods described in the embodiments of the above communication system, terminal device, network device, etc., which will not be repeated here.

The communication method according to the embodiments of the present disclosure is described below with reference to specific embodiments.

Embodiment 1: a terminal device determines the CPU of a first CSI report. When both the first CSI report and a second CSI report need to start updating at a certain symbol (designated symbol), and the terminal device has already started updating a third CSI report before that symbol and the third CSI report needs to continue updating at that symbol, when the CPUs occupied by the first CSI report, the second CSI report, and the third CSI report are greater than the maximum CPU that the terminal device can support, the terminal device does not update the first CSI report or the second CSI report, whichever has a lower priority.
a) Because the updating of the third CSI report has already been started before that symbol, the CPUs for the third CSI report must be reserved, e.g., the CPUs required for the third CSI report are L.
b) For updating of the first CSI report and the second CSI report needs to be started at that symbol, when the CPUs occupied by the first CSI report and the second CSI report are greater than N-L, the first CSI report and the second CSI report are sorted by priority, and the CSI report with a lower priority between the first CSI report and the second CSI report is not updated, where N is the maximum number of CPUs that the terminal device can support.

Embodiment 2: Based on Embodiment 1, the CPU value of the first report is any of the following:
a) *O_{CPU} = Kₛ,* where *Kₛ* is the number of CSI-RS resources included in the CMR;
b) *O_{CPU} =* Kₛ-1, where *Kₛ* is the number of CSI-RS resources included in the CMR;
*c) O_{CPU}* = 1;
d) *O_{CPU} = x · N_{TRP},* where x is reported by the UE capability (if the CPU is not an integer, round down). *N_{TRP}* is the number of TRPs used for CJT transmission, which may be the same as the number of CSI-RS resources included in the CMR;
e) *O_{CPU} = x · (N_{TRP}-1),* where x is reported by the UE capability (if the CPU is not an integer, round down).

Embodiment 3: Based on Embodiment 1, the priority value may be determined based on formula (6):
Here, *y*=0 indicates an aperiodic CSI report carried in a PUSCH, y=1 indicates a semi-persistent CSI report carried in a PUSCH, *y*=2 indicates a semi-persistent CSI report carried in a PUCCH, and *y*=3 indicates a periodic CSI report carried in a PUCCH. *k*=0 indicates a CSI report carrying L1-RSRP or L1-SINR, *k*=1 indicates a CSI report not carrying L1-RSRP or L1-SINR. c is the index of the serving cell, *N_{cells}* is the value of the higher layer parameter maxNrofServingCells, s is the report configuration identifier (reportConfigID), and *Mₛ* is the value of the higher layer parameter maxNrofCSI-ReportConfigurations. Only *k* is related to different CSI report types.

A higher priority value indicates a lower priority.

Embodiment 4: Based on Embodiment 3, the value of k for the first CSI report may include any of the following:
a) Priority 1 of the first CSI report: higher than other CSI reports, i.e., the value of *k* for the first CSI report may be less than 0.

Here, other CSI reports may include at least one of:
cri-RI-i1;
cri-RI-i1-CQI;
cri-RI-CQI;
cri-RSRP;
cri-SINR;
ssb-Index-RSRP;
ssb-Index-SINR;
cri-RI-LI-PMI-CQI;
cri-RSRP-Index;
ssb-Index-RSRP-Index;
cri-SINR-Index;
ssb-Index-SINR-Index; or tdcp.
b) Priority 2 of the first CSI report: lower than other CSI reports, i.e., the value of *k* for the first CSI report may be greater than 1.
c) Priority 3 of the first CSI report: the same as the priority of other CSI reports except L1-RSRP or L1-SINR, i.e., the value of *k* for the first CSI report may be less than 1.

Embodiment 5: Based on Embodiment 1, the first CSI report may include at least one of:
a) The difference between the arrival time of a Reference Signal (RS) on a CSI-RS resource and the arrival time of an RS on a Reference CSI-RS resource;
b) The frequency offset between an RS on a CSI-RS resource and an RS on a Reference CSI-RS resource;
c) The phase offset between an RS on a CSI-RS resource and an RS on a Reference CSI-RS resource;
d) At least one of the Doppler shift, Doppler spread, average delay, or delay spread corresponding to the RS on each CSI-RS resource;
e) At least one of the Doppler shift difference, Doppler spread difference, average delay difference, or delay spread difference between an RS on a CSI-RS resource and an RS on a Reference CSI-RS resource.

Embodiment 6: Based on Embodiment 5, the arrival time difference is defined as the time difference between two different RSs arriving at the UE side.
a) The arrival time may consider the slot and symbol positions corresponding to the two RSs, i.e., the arrival time plus the influence of the slot and symbol position differences corresponding to the CSI-RS resources; or
b) The arrival time may not consider the slot and symbol positions corresponding to the two RSs, i.e., assuming that the slot and symbol positions corresponding to the two RSs are the same, only including the arrival time difference caused by the different positions or propagation paths of the two TRPs.

Embodiment 7: Based on Embodiment 5, the terminal device determines a reference CSI-RS resource.

Embodiment 8: Based on Embodiment 7, the terminal device receives a reference signal resource configuration. The reference signal resource includes one CMR. One CMR includes multiple CSI-RS resources. The terminal device determines a reference CSI-RS resource. The determination method may include:
a) Base station indication:
   Explicit indication: indicating which of the multiple CSI-RS resources included in the CMR is the reference CSI-RS resource;
   Implicit indication: using the first CSI-RS resource as the reference CSI-RS resource.
b) Terminal device reporting:
   The terminal device measures by itself and determines the CSI-RS resource corresponding to the earliest arriving CSI-RS as the reference CSI-RS resource.

In some embodiments of the present disclosure, a communication system is provided. The communication system may include a terminal device and a network device. The terminal device may perform the communication method performed by the terminal device in the preceding embodiments of the present disclosure. The network device may perform the communication method performed by the network device in the preceding embodiments of the present disclosure.

The embodiments of the present disclosure also propose an apparatus for implementing any of the above methods. For example, an apparatus is proposed, which includes units or modules for implementing the steps performed by the terminal in any of the above methods. For another example, another apparatus is proposed, which includes units or modules for implementing the steps performed by a network device (e.g., an access network device, a core network function node, a core network device, etc.) in any of the above methods.

It should be understood that the division of units or modules in the above apparatus is only a logical function division, and in actual implementation, they may be fully or partially integrated into one physical entity, or physically separated. In addition, the units or modules in the apparatus may be implemented in the form of a processor calling software: for example, the apparatus includes a processor, the processor is connected to a memory, and instructions are stored in the memory. The processor calls the instructions stored in the memory to implement any of the above methods or to implement the functions of the units or modules of the above apparatus. The processor is, for example, a general-purpose processor, such as a Central Processing Unit (CPU) or a microprocessor, and the memory is a memory within the apparatus or a memory external to the apparatus. Alternatively, the units or modules in the apparatus may be implemented in the form of hardware circuits. The functions of some or all of the units or modules may be implemented by designing the hardware circuit. The above hardware circuit may be understood as one or more processors. For example, in some embodiments, the above hardware circuit is an Application-Specific Integrated Circuit (ASIC), which implements the functions of some or all of the above units or modules by designing the logic relationship of the components within the circuit. For another example, in another embodiment, the above hardware circuit may be implemented by a Programmable Logic Device (PLD). Taking a Field Programmable Gate Array (FPGA) as an example, it may include a large number of logic gate circuits, and the connection relationship between the logic gate circuits is configured by a configuration file, thereby implementing the functions of some or all of the above units or modules. All the units or modules of the above apparatus may be implemented entirely by a processor calling software, or entirely by a hardware circuit, or partly by a processor calling software and the remaining part by a hardware circuit.

In the embodiments of the present disclosure, a processor is a circuit with signal processing capabilities. In some embodiments, the processor may be a circuit with instruction fetching and executing capabilities, such as a Central Processing Unit (CPU), a microprocessor, a Graphics Processing Unit (GPU) (which can be understood as a microprocessor), or a Digital Signal Processor (DSP), etc. In another embodiment, the processor may implement certain functions through the logic relationship of a hardware circuit. The logic relationship of the above hardware circuit is fixed or reconfigurable. For example, the processor is a hardware circuit implemented by an Application-Specific Integrated Circuit (ASIC) or a Programmable Logic Device (PLD), such as an FPGA. In a reconfigurable hardware circuit, the process of the processor loading a configuration file and configuring the hardware circuit can be understood as the process of the processor loading instructions to implement the functions of some or all of the above units or modules. In addition, it may also be a hardware circuit designed for artificial intelligence, which can be understood as an ASIC, such as a Neural Network Processing Unit (NPU), a Tensor Processing Unit (TPU), a Deep Learning Processing Unit (DPU), etc.

FIG. 6A is a schematic structural diagram of a terminal according to an embodiment of the present disclosure. As shown in FIG. 6A, the terminal device 101 may include at least one of a transceiver module 6101, a processing module 6102, etc. In some embodiments, the transceiver module 6101 is configured to determine that a sum of a first CSI CPU quantity and a second CPU quantity is greater than a CPU threshold, where the first CPU quantity is a CPU quantity required for updating a first CSI report, and the second CPU quantity is a CPU quantity required for updating a second CSI report, and not update a third CSI report, where the third CSI report is a CSI report with a lower priority between the first CSI report and the second CSI report. Optionally, the transceiver module 6101 may be used to perform at least one of the communication steps (e.g., step S2105, but not limited thereto) performed by the terminal device 101 in any of the above methods, which will not be repeated here.

In some embodiments, the transceiver module may include a sending module and/or a receiving module, and the sending module and the receiving module may be separate or integrated together. Optionally, the transceiver module may be interchanged with a transceiver.

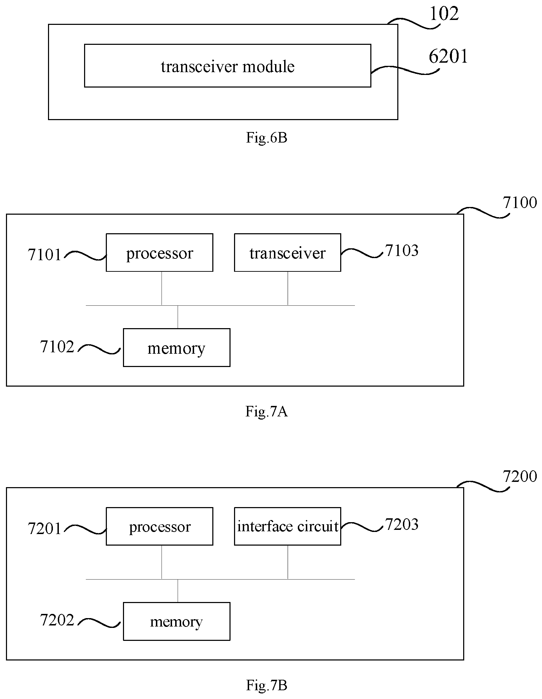

FIG. 6B is a schematic structural diagram of a network device according to an embodiment of the present disclosure. As shown in FIG. 6B, the network device 102 may include at least one of a transceiver module 6201, a processing module 6202, etc. In some embodiments, the transceiver module 6201 is configured to receive a fifth CSI report that is updated by a terminal and/or a third CSI report that is not updated by a terminal in a case where the terminal determines that a sum of a first CSI CPU quantity and a second CPU quantity is greater than a CPU threshold, where the first CPU quantity is a CPU quantity required for updating a first CSI report, the second CPU quantity is a CPU quantity required for updating a second CSI report, the fifth CSI report includes a CSI report other than the third CSI report, and the third CSI report is a CSI report with a lower priority between the first CSI report and the second CSI report. Optionally, the transceiver module 6201 may be used to perform at least one of the communication steps (e.g., step S4101, but not limited thereto) performed by the network device 102 in any of the above methods, which will not be repeated here.

In some embodiments, the transceiver module may include a sending module and/or a receiving module, and the sending module and the receiving module may be separate or integrated together. Optionally, the transceiver module may be interchanged with a transceiver.

FIG. 7A is a schematic structural diagram of a communication device 7100 according to an embodiment of the present disclosure. The communication device 7100 may be a network device (e.g., an access network device, a core network device, etc.), or a terminal (e.g., a user equipment, etc.), or a chip, chip system, or processor, etc., supporting the first device in implementing any of the above methods, or a chip, chip system, or processor, etc., supporting a terminal in implementing any of the above methods. The communication device 7100 can be used to implement the methods described in the above method embodiments, and for details reference can be made to the description in the above method embodiments.

As shown in FIG. 7A, the communication device 7100 includes one or more processors 7101. The processor 7101 may be a general-purpose processor or a special-purpose processor, for example, may be a baseband processor or a central processing unit. The baseband processor can be used to process communication protocols and communication data, and the central processing unit can be used to control a communication device (e.g., a base station, a baseband chip, an IoT device, an IoT device chip, a DU or a CU, etc.), execute programs, and process data of the programs. The communication device 7100 is used to perform any of the above methods.

In some embodiments, the communication device 7100 further includes one or more memories 7102 for storing instructions. Optionally, all or part of the memory 7102 may also be outside the communication device 7100.

In some embodiments, the communication device 7100 further includes one or more transceivers 7103. When the communication device 7100 includes one or more transceivers 7103, the transceiver 7103 performs at least one of the communication steps (e.g., step S2105, step S4101, but not limited thereto) in the above methods, and the processor 7101 performs at least one of the other steps (e.g., step S2101, but not limited thereto).

In some embodiments, the transceiver may include a receiver and/or a transmitter, and the receiver and the transmitter may be separate or integrated together. Optionally, terms such as transceiver, transceiver unit, transceiver machine, transceiver circuit may be interchanged, terms such as transmitter, transmitting unit, transmitter machine, transmitting circuit may be interchanged, and terms such as receiver, receiving unit, receiver machine, receiving circuit may be interchanged.

In some embodiments, the communication device 7100 may include one or more interface circuits. Optionally, the interface circuit is connected to the memory 7102, and the interface circuit can be used to receive signals from the memory 7102 or other devices, and can be used to send signals to the memory 7102 or other devices. For example, the interface circuit can read the instructions stored in the memory 7102 and send the instructions to the processor 7101.

In the above description of the embodiments, the communication device 7100 may be a first device or an IoT device, but the scope of the communication device 7100 described in the present disclosure is not limited thereto, and the structure of the communication device 7100 may not be limited by FIG. 7A. The communication device may be an independent device or may be part of a larger device. For example, the communication device may be: (1) an independent Integrated Circuit (IC), or a chip, or a chip system or subsystem; (2) a set of one or more ICs, optionally, the set of ICs may also include a storage component for storing data and programs; (3) an ASIC, such as a modem; (4) a module that can be embedded in other devices; (5) a receiver, an IoT device, a smart IoT device, a cellular phone, a wireless device, a handset, a mobile unit, a vehicle-mounted device, a first device, a cloud device, an artificial intelligence device, etc.; (6) others, etc.

FIG. 7B is a schematic structural diagram of a chip 7200 according to an embodiment of the present disclosure. For the case where the communication device 7100 may be a chip or a chip system, reference may be made to the schematic structural diagram of the chip 7200 shown in FIG. 7B, but is not limited thereto.

The chip 7200 includes one or more processors 7201, and the chip 7200 is used to perform any of the above methods.

In some embodiments, the chip 7200 further includes one or more interface circuits 7203. Optionally, the interface circuit 7203 is connected to a memory 7202, and the interface circuit 7203 can be used to receive signals from the memory 7202 or other devices, and the interface circuit 7203 can be used to send signals to the memory 7202 or other devices. For example, the interface circuit 7203 can read instructions stored in the memory 7202 and send the instructions to the processor 7201.

In some embodiments, the interface circuit 7203 performs at least one of the communication steps (e.g., step S2101, step S4101, but not limited thereto) in the above methods, and the processor 7201 performs at least one of the other steps (e.g., step S2102, but not limited thereto).

In some embodiments, terms such as interface circuit, interface, transceiver pin, transceiver may be interchanged.

In some embodiments, the chip 7200 further includes one or more memories 7202 for storing instructions. Optionally, all or part of the memory 7202 may also be outside the chip 7200.

The present disclosure also proposes a storage medium having instructions stored thereon, which, when executed on the communication device 7100, cause the communication device 7100 to perform any of the above methods. Optionally, the storage medium is an electronic storage medium. Optionally, the storage medium is a computer-readable storage medium, but is not limited thereto, and may also be a storage medium readable by other devices. Optionally, the storage medium may be a non-transitory storage medium, but is not limited thereto, and may also be a transitory storage medium.

The present disclosure also proposes a program product which, when executed by the communication device 7100, causes the communication device 7100 to perform any of the above methods. Optionally, the program product may be a computer program product.

The present disclosure also proposes a computer program which, when run on a computer, causes the computer to perform any of the above methods.

## Claims

1. A communication method, performed by a terminal, comprising:
determining that a sum of a first channel state information (CSI) processing unit (CPU) quantity and a second CPU quantity is greater than a CPU threshold, wherein the first CPU quantity is a CPU quantity required for updating a first CSI report, and the second CPU quantity is a CPU quantity required for updating a second CSI report, and
not updating a third CSI report, wherein the third CSI report is a CSI report with a lower priority between the first CSI report and the second CSI report.

2. The method according to claim 1, wherein the CPU threshold is determined by:
determining a third CPU quantity required for updating a fourth CSI report, wherein the fourth CSI report is a CSI report of which an update is started before a designated symbol and is to be ongoing at the designated symbol, and the designated symbol is a symbol from which an updating of the first CSI report and the second CSI report is to be started; and
determining a difference between a designated CPU quantity and the third CPU quantity as the CPU threshold, wherein the designated CPU quantity is a CPU quantity that the terminal is capable of supporting.

3. The method according to claim 1 or 2, wherein the first CPU quantity is one of:
a quantity of channel state information reference signal (CSI-RS) resources comprised in a channel measurement resource (CMR);
a difference between a quantity of CSI-RS resources comprised in a CMR and 1; 1;
a product of a first quantity and a second quantity, wherein the first quantity is a quantity of transmission reception points (TRPs), and the second quantity is determined according to a capability of the terminal; or
a product of a third quantity and a second quantity, wherein the third quantity is a difference between a quantity of TRPs and 1.

4. The method according to any one of claims 1 to 3, further comprising:
determining a first priority value of the first CSI report and a second priority value of the second CSI report; and
determining the third CSI report according to the first priority value and the second priority value.

5. The method according to claim 4, wherein determining the first priority value of the first CSI report and the second priority value of the second CSI report comprises:
determining the first priority value according to a first parameter and first information of the first CSI report, wherein the first information comprises at least one of: a reporting manner, an index of a serving cell, a maximum quantity of serving cells, a report configuration identifier, or a maximum CSI report quantity capable of being configured; and
determining the second priority value according to a first parameter and first information of the second CSI report.

6. The method according to claim 5, wherein the reporting manner comprises one of:
an aperiodic CSI report carried in a physical uplink shared channel (PUSCH);
a semi-persistent CSI report carried in a PUSCH;
a semi-persistent CSI report carried in a physical uplink control channel (PUCCH); or
a periodic CSI report carried in a PUCCH.

7. The method according to any one of claims 1 to 6, wherein
a value of a first parameter of the first CSI report is less than or equal to 0; or
a value of a first parameter of the first CSI report is greater than or equal to 1; or
a value of a first parameter of the first CSI report is greater than or equal to 0 and less than or equal to 1;
wherein a value of a first parameter of the second CSI report carrying a layer-1 reference signal received power (L1-RSRP) or a layer-1 signal to interference plus noise ratio (L1-SINR) is 0, and a value of a first parameter of the second CSI report not carrying an L1-RSRP or L1-SINR is 1.

8. The method according to any one of claims 1 to 7, wherein the first CSI report comprises at least one of:
a time difference between a first arrival time and a second arrival time, wherein the first arrival time is an arrival time of a first reference signal in a CSI-RS resource, and the second arrival time is an arrival time of a second reference signal in a reference CSI-RS resource;
a frequency offset between a first reference signal and a second reference signal;
a phase offset between a first reference signal and a second reference signal;
a second parameter corresponding to a first reference signal and/or a second parameter corresponding to a second reference signal, wherein the second parameter comprises at least one of: a Doppler shift, a Doppler spread, an average delay, or a delay spread; or
a difference between a second parameter corresponding to a first reference signal and a second parameter corresponding to a second reference signal.

9. The method according to claim 8, wherein
the first arrival time is a time when the first reference signal arrives at the terminal, and the second arrival time is a time when the second reference signal arrives at the terminal.

10. The method according to claim 8 or 9, wherein
the time difference comprises a time interval between a time domain position corresponding to the first reference signal and a time domain position corresponding to the second reference signal; or the time difference does not comprise a time interval between a time domain position corresponding to the first reference signal and a time domain position corresponding to the second reference signal;
wherein the time domain position comprises at least one of: a slot position or a symbol position.

11. The method according to any one of claims 8 to 10, further comprising:
determining the reference CSI-RS resource.

12. The method according to claim 11, wherein determining the reference CSI-RS resource comprises:
receiving second information sent by a network device, wherein the second information comprises a CMR, and the CMR comprises at least one CSI-RS resource; and
determining the reference CSI-RS resource from the at least one CSI-RS resource.

13. The method according to claim 12, wherein determining the reference CSI-RS resource from the at least one CSI-RS resource comprises one of:
determining a designated CSI-RS resource among the at least one CSI-RS resource as the reference CSI-RS resource, wherein the designated CSI-RS resource is a CSI-RS resource indicated by the network device or a first CSI-RS resource among the at least one CSI-RS resource; or
determining a CSI-RS resource that arrives at the terminal first among the at least one CSI-RS resource as the reference CSI-RS resource.

14. The method according to any one of claims 1 to 13, wherein the second CSI report comprises at least one of:
CSI-RS resource indicator (CRI)-rank indicator (RI)-precoding matrix indicator (PMI)-channel quality indicator (CQI);
CRI-RI-i1;
CRI-RI-i1-CQI;
CRI-RI-CQI;
CRI-RSRP;
CRI- SINR;
synchronization signal block (SSB)-Index-RSRP;
SSB-Index-SINR;
CRI-RI-layer Indicator (LI)-PMI-CQI;
CRI-RSRP-Index;
SSB-Index-RSRP-Index;
CRI-SINR-Index; or
SSB-Index-SINR-Index; or time domain channel properties (TDCP).

15. A communication method, performed by a network device, comprising:
receiving a fifth channel state information (CSI) report that is updated by a terminal and/or a third CSI report that is not updated by a terminal in a case where the terminal determines that a sum of a first CSI processing unit (CPU) quantity and a second CPU quantity is greater than a CPU threshold, wherein the first CPU quantity is a CPU quantity required for updating a first CSI report, the second CPU quantity is a CPU quantity required for updating a second CSI report, the fifth CSI report comprises a CSI report other than the third CSI report, and the third CSI report is a CSI report with a lower priority between the first CSI report and the second CSI report.

16. The method according to claim 15, wherein the CPU threshold is determined by:
determining a third CPU quantity required for updating a fourth CSI report, wherein the fourth CSI report is a CSI report of which an update is started before a designated symbol and is to be ongoing at the designated symbol, and the designated symbol is a symbol from which an updating of the first CSI report and the second CSI report is to be started; and
determining a difference between a designated CPU quantity and the third CPU quantity as the CPU threshold, wherein the designated CPU quantity is a CPU quantity that the terminal is capable of supporting.

17. The method according to claim 15 or 16, wherein the first CPU quantity is one of:
a quantity of channel state information reference signal (CSI-RS) resources comprised in a channel measurement resource (CMR);
a difference between a quantity of CSI-RS resources comprised in a CMR and 1; 1;
a product of a first quantity and a second quantity, wherein the first quantity is a quantity of transmission reception points (TRPs), and the second quantity is determined according to a capability of the terminal; or
a product of a third quantity and a second quantity, wherein the third quantity is a difference between a quantity of TRPs and 1.

18. The method according to any one of claims 15 to 17, wherein the third CSI report is determined according to a first priority value of the first CSI report and a second priority value of the second CSI report, the first priority value is determined according to a first parameter and first information of the first CSI report, the second priority value is determined according to a first parameter and first information of the second CSI report, and the first information comprises at least one of: a reporting manner, an index of a serving cell, a maximum quantity of serving cells, a report configuration identifier, or a maximum CSI report quantity capable of being configured.

19. The method according to claim 18, wherein the reporting manner comprises one of:
an aperiodic CSI report carried in a physical uplink shared channel (PUSCH);
a semi-persistent CSI report carried in a PUSCH;
a semi-persistent CSI report carried in a physical uplink control channel (PUCCH); or
a periodic CSI report carried in a PUCCH.

20. The method according to any one of claims 15 to 19, wherein
a value of a first parameter of the first CSI report is less than or equal to 0; or
a value of a first parameter of the first CSI report is greater than or equal to 1; or
a value of a first parameter of the first CSI report is greater than or equal to 0 and less than or equal to 1;
wherein a value of a first parameter of the second CSI report carrying a layer-1 reference signal received power (L1-RSRP) or a layer-1 signal to interference plus noise ratio (L1-SINR) is 0, and a value of a first parameter of the second CSI report not carrying an L1-RSRP or L1-SINR is 1.

21. The method according to any one of claims 15 to 20, wherein the first CSI report comprises at least one of:
a time difference between a first arrival time and a second arrival time, wherein the first arrival time is an arrival time of a first reference signal in a CSI-RS resource, and the second arrival time is an arrival time of a second reference signal in a reference CSI-RS resource;
a frequency offset between a first reference signal and a second reference signal;
a phase offset between a first reference signal and a second reference signal;
a second parameter corresponding to a first reference signal and/or a second parameter corresponding to a second reference signal, wherein the second parameter comprises at least one of: a Doppler shift, a Doppler spread, an average delay, or a delay spread; or
a difference between a second parameter corresponding to a first reference signal and a second parameter corresponding to a second reference signal.

22. The method according to claim 21, wherein
the first arrival time is a time when the first reference signal arrives at the terminal, and the second arrival time is a time when the second reference signal arrives at the terminal.

23. The method according to claim 21 or 22, wherein
the time difference comprises a time interval between a time domain position corresponding to the first reference signal and a time domain position corresponding to the second reference signal; or the time difference does not comprise a time interval between a time domain position corresponding to the first reference signal and a time domain position corresponding to the second reference signal;
wherein the time domain position comprises at least one of: a slot position or a symbol position.

24. The method according to any one of claims 21 to 23, further comprising:
sending second information to the terminal, wherein the second information comprises a CMR, and the CMR comprises at least one CSI-RS resource, and the second information is used for the terminal to determine the reference CSI-RS resource from the at least one CSI-RS resource.

25. The method according to any one of claims 15 to 24, wherein the second CSI report comprises at least one of:
CSI-RS resource indicator (CRI)-rank indicator (RI)-precoding matrix indicator (PMI)-channel quality indicator (CQI);
CRI-RI-i1;
CRI-RI-i1-CQI;
CRI-RI-CQI;
CRI-RSRP;
CRI- SINR;
synchronization signal block (SSB)-Index-RSRP;
SSB-Index-SINR;
CRI-RI-layer Indicator (LI)-PMI-CQI;
CRI-RSRP-Index;
SSB-Index-RSRP-Index;
CRI-SINR-Index; or
SSB-Index-SINR-Index; or time domain channel properties (TDCP).

26. A terminal, comprising a transceiver module configured to:
determine that a sum of a first channel state information (CSI) processing unit (CPU) quantity and a second CPU quantity is greater than a CPU threshold, wherein the first CPU quantity is a CPU quantity required for updating a first CSI report, and the second CPU quantity is a CPU quantity required for updating a second CSI report, and
not update a third CSI report, wherein the third CSI report is a CSI report with a lower priority between the first CSI report and the second CSI report.

27. A network device, comprising:
a transceiver module configured to receive a fifth channel state information (CSI) report that is updated by a terminal and/or a third CSI report that is not updated by a terminal in a case where the terminal determines that a sum of a first CSI processing unit (CPU) quantity and a second CPU quantity is greater than a CPU threshold, wherein the first CPU quantity is a CPU quantity required for updating a first CSI report, the second CPU quantity is a CPU quantity required for updating a second CSI report, the fifth CSI report comprises a CSI report other than the third CSI report, and the third CSI report is a CSI report with a lower priority between the first CSI report and the second CSI report.

28. A communication device, comprising:
one or more processors;
wherein the communication device is configured to perform the communication method according to any one of claims 1 to 14 or any one of claims 15 to 25.

29. A communication system, comprising a terminal and a network device, wherein the terminal is configured to perform the communication method according to any one of claims 1 to 14, and the network device is configured to perform the communication method according to any one of claims 15 to 25.

30. A storage medium, having stored therein instructions that, when executed on a communication device, cause the communication device to perform the communication method according to any one of claims 1 to 14 or any one of claims 15 to 25.
